# EUROPEAN PATENT APPLICATION

(11) **EP 4 704 023 A1**
(43) Date of publication of application: **04.03.2026**
(21) Application number: 24797114.6
(22) Date of filing: 25.04.2024
(51) Int. Cl.: G06Q 50/20, A63H 3/02, A63H 5/00, A63H 11/00, B25J 13/00, G06F 3/01, G06F 8/20, G06N 3/008, G06N 5/04, G10L 13/00, G10L 25/63

(54) **ACTION CONTROL SYSTEM AND ELECTRONIC APPARATUS**

(30) Priority: 26.04.2023 JP 2023072345; 26.04.2023 JP 2023072346; 26.04.2023 JP 2023072689; 26.04.2023 JP 2023072335; 27.04.2023 JP 2023073402; 27.04.2023 JP 2023073403
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/016209
(87) International publication number: WO 2024/225369

(57) **Abstract**

An action control system includes a detection unit that detects a learning status of a user in a predetermined field of study, and an output control unit that causes an electronic device including a text generation model to output information corresponding to the learning status to the user.

## Description

### Field

The present invention relates to an action control system and an electronic device.

### Background

Patent Literature 1 discloses a technology of determining an appropriate action of a robot in accordance with a state of a user. The conventional technology of Patent Literature 1 is about recognizing a reaction of a user when the robot executes a specific action, receiving information related to an action appropriate for a recognized state of the user from a server when it is difficult to determine an action of the robot with respect to the recognized reaction of the user, and updating the action of the robot.

### Citation List

### Patent Literature

Patent Literature 1: Japanese Patent No. 6053847 A

### Summary

### Technical Problem

However, in the conventional technology, in some cases, it may be difficult to output appropriate information in accordance with a learning status.

### Solution to Problem

According to a first embodiment, an action control system is provided. The action control system includes: a detection unit that detects a learning status of a user in a predetermined field of study; and an output control unit that causes an electronic device including a text generation model to output information corresponding to the learning status to the user.

### Brief Description of Drawings

FIG. 1 is a diagram schematically illustrating an example of a system according to a first embodiment.
FIG. 2 is a diagram schematically illustrating a functional configuration of a robot.
FIG. 3 is a diagram schematically illustrating a data structure of character data.
FIG. 4 is a diagram schematically illustrating an example of an operation flow related to setting of a character.
FIG. 5 is a diagram schematically illustrating an example of an operation flow performed by the robot.
FIG. 6 is a diagram schematically illustrating a functional configuration of a support unit.
FIG. 7 is a diagram schematically illustrating an example of an operation flow performed by the support unit.
FIG. 8 is a diagram schematically illustrating an example of a hardware configuration of a computer.
FIG. 9 is a diagram illustrating an emotion map on which a plurality of emotions is mapped.
FIG. 10 is a diagram illustrating another example of the emotion map.
FIG. 11 is a diagram illustrating an example of an emotion table.
FIG. 12 is a diagram illustrating an example of an emotion table.
FIG. 13 is an external view and an internal structural view of a stuffed toy according to another embodiment.
FIG. 14 is a rear-front view of the stuffed toy according to another embodiment.
FIG. 15 is a diagram schematically illustrating an example of an operation flow performed by the support unit.
FIG. 16 is a diagram schematically illustrating a functional configuration of a robot.
FIG. 17 is a diagram schematically illustrating a functional configuration of an output unit.
FIG. 18 is a diagram schematically illustrating an example of an operation flow performed by the output unit.
FIG. 19 is a diagram schematically illustrating a functional configuration of a robot.
FIG. 20 is a diagram schematically illustrating a functional configuration of an output unit.
FIG. 21 is a diagram schematically illustrating an example of an operation flow performed by the output unit.
FIG. 22 is a diagram schematically illustrating an example of a system according to a fifth embodiment.
FIG. 23 is a diagram schematically illustrating a functional configuration of a robot.
FIG. 24 is a diagram schematically illustrating an example of an operation flow related to operation of determining an action in a robot.

### Description of Embodiments

Hereinafter, the present invention will be described through embodiments of the invention, but the following embodiments do not limit the invention recited in the claims. In addition, not all combinations of features described in the embodiments are needed for the solution of the invention.

### First embodiment

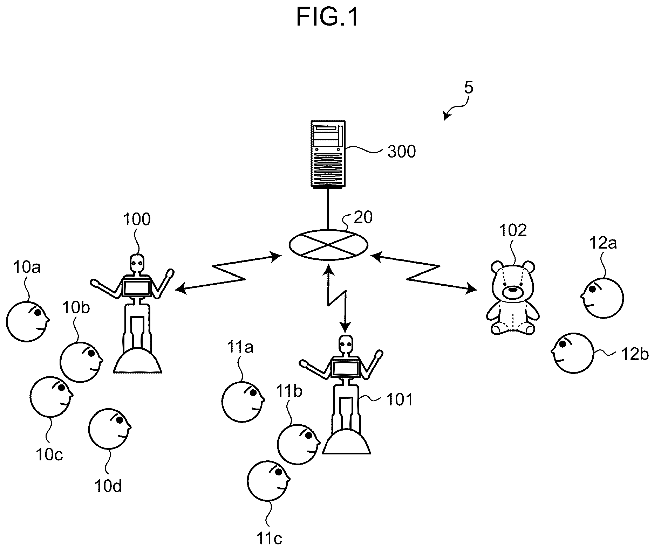

FIG. 1 is a diagram schematically illustrates an example of a system 5 according to a first embodiment. The system 5 includes a robot 100, a robot 101, a robot 102, and a server 300. A user 10a, a user 10b, a user 10c, and a user 10d are users of the robot 100. A user 11a, a user 11b, and a user 11c are users of the robot 101. A user 12a and a user 12b are users of the robot 102. In the description of the first embodiment, the user 10a, the user 10b, the user 10c, and the user 10d may be collectively referred to as a user 10. Further, the user 11a, the user 11b, and the user 11c may be collectively referred to as a user 11. Furthermore, the user 12a and the user 12b may be collectively referred to as a user 12. The robot 101 and the robot 102 have substantially the same functions as those of the robot 100. Therefore, the system 5 will be described mainly focusing on the function of the robot 100.

An appearance of the robot may imitate a figure of a person like the robot 100 and the robot 101, or may be a stuffed toy like the robot 102. The robot 102 has an appearance of a stuffed toy, and thus is considered to be familiar to children in particular.

The robot 100 has a conversation with the user 10 and provides a video to the user 10. At this time, the robot 100 performs conversation with the user 10 and provides a video or the like to the user 10 in cooperation with the server 300 or the like that is able to perform communication via a communication network 20. For example, the robot 100 not only performs self-learning of appropriate conversations, but also performs learning in cooperation with the server 300 so as to achieve more appropriate conversations with the user 10. Further, the robot 100 causes the server 300 to record captured video data or the like of the user 10, requests the video data or the like from the server 300 as necessary, and provides the video data or the lie to the user 10.

Furthermore, the robot 100 has emotion values that indicate types of emotions of its own. For example, the robot 100 has emotion values indicating intensity of each of emotions of "delighted", "angry", "sad", "joyful", "pleasant", "unpleasant", "secure", "anxious", "sorrowful", "excited", "worried", "relieved", "fulfilled", "empty", and "neutral". For example, when the robot 100 has a conversation in a state of having a high emotion value of excitement with the user 10, the robot emits a voice at a high speed. In this manner, the robot 100 can express its own emotion by action.

Moreover, the robot 100 may be configured to determine the action of the robot 100 corresponding to an emotion of the user 10 by using matching of a text generation model (also referred to as an Artificial Intelligence (AI) chat engine) with an emotion engine. Specifically, the robot 100 may be configured to recognize an action of the user 10, determine an emotion of the user 10 behind the action of the user, and determine an action of the robot 100 corresponding to the determined emotion.

More specifically, when having recognized an action of the user 10, the robot 100 uses a preset text generation model to automatically generate action content to be taken by the robot 100 with respect to the action of the user 10. The text generation model may be construed as an algorithm and an operation for automatic dialog processing with texts. The text generation model is known as disclosed in Japanese Patent No. 2018-081444 A, for example, and therefore, a detailed description thereof will be omitted. The text generation model as described above is configured by a Large Language Model (LLM). As described above, in the first embodiment, by combining the Large Language Model and the emotion engine, it is possible to reflect the emotions of the user 10 and the robot 100 and various linguistic information in the action of the robot 100. In other words, according to the first embodiment, a synergistic effect may be obtained by combining the text generation model and the emotion engine.

Here, each of the robots has a learning support function to detect a learning status of the user 10 in various fields of study and output information in accordance with the detected learning status. For example, by detecting a level of understanding of a specific field of study of the user 10 and outputting a learning guideline, a learning plan, and a learning resource (reference book or the like), each of the robots is able to output appropriate information in accordance with the learning status of the user 10.

Furthermore, the robot 100 has a function of recognizing an action of the user 10. The robot 100 recognizes the action of the user 10 by analyzing a face image of the user 10 acquired by a camera function and a voice of the user 10 acquired by a microphone function. The robot 100 determines an action to be executed by the robot 100 based on the recognized action of the user 10 or the like.

The robot 100 stores a rule that defines an action to be executed by the robot 100 based on the emotion of the user 10, the emotion of the robot 100, and the action of the user 10, and takes various actions in accordance with the rule.

Specifically, the robot 100 has a reaction rule for determining an action of the robot 100 based on an emotion of the user 10, an emotion of the robot 100, and an action of the user 10. The reaction rule defines, for example, that in a case where the action of the user 10 is "smiling", the action of the robot 100 is to be an action of "smiling". In addition, the reaction rule defines, for example, that in a case where the action of the user 10 is "getting angry", the action of the robot 100 is to be an action of "apologizing". Furthermore, the reaction rule defines, for example, that in a case where the action of the user 10 is "asking a question", the action of the robot 100 is to be an action of "answering the question". The reaction rule defines, for example, that in a case where the action of the user 10 is "expressing sorrow", the action of the robot 100 is to be an action of "offering words".

Based on the reaction rule, having recognized that the action of the user 10 is "getting angry", the robot 100 selects an action of "apologizing" prescribed in the reaction rule, as the action to be executed by the robot 100. For example, when selecting the action of "apologizing", the robot 100 takes an action of "apologizing" and outputs a voice expressing a word of "apologizing".

Furthermore, it is prescribed that, when a condition that the emotion of the robot 100 is "neutral" (that is, "delighted" = 0, "angry" = 0, "sad" = 0, and "joyful" = 0) and a state of the user 10 is "alone and looks sad" is satisfied, it is possible to execute an emotional change in which the emotion of the robot 100 turns to "worried" and an action of "offering words".

When the robot 100 recognizes that the current emotion of the robot 100 is "neutral" and the user 10 is alone and looks sad, the emotion value of "sad" of the robot 100 is increased based on the reaction rule. Furthermore, the robot 100 selects an action of "offering words" prescribed in the reaction rule as an action to be executed on the user 10. For example, when the action of "offering words" is selected, the robot 100 outputs a word "What's wrong?" indicating a concern in a concerned voice obtained by voice conversion.

Furthermore, the robot 100 transmits, to the server 300, user reaction information indicating that a positive reaction has been obtained from the user 10 by this action. The user reaction information includes, for example, a user action of "getting angry", an action of the robot 100 of "apologizing", a positive reaction of the user 10, and an attribute of the user 10.

The server 300 stores the user reaction information received from the robot 100. The server 300 receives and stores the user reaction information not only from the robot 100 but also from the robot 101 and the robot 102 individually. Subsequently, the server 300 analyzes the user reaction information received from the robot 100, the robot 101, and the robot 102, and updates the reaction rule.

The robot 100 inquires the server 300 about the updated reaction rule and receives the updated reaction rule from the server 300. The robot 100 incorporates the updated reaction rule into the reaction rule that is stored in the robot 100. With this configuration, the robot 100 is able to incorporate the reaction rule acquired by the robot 101, the robot 102, or the like into its own reaction rule. When the reaction rule is updated, the updated reaction rule may be automatically transmitted from the server 300 to the robot 100.

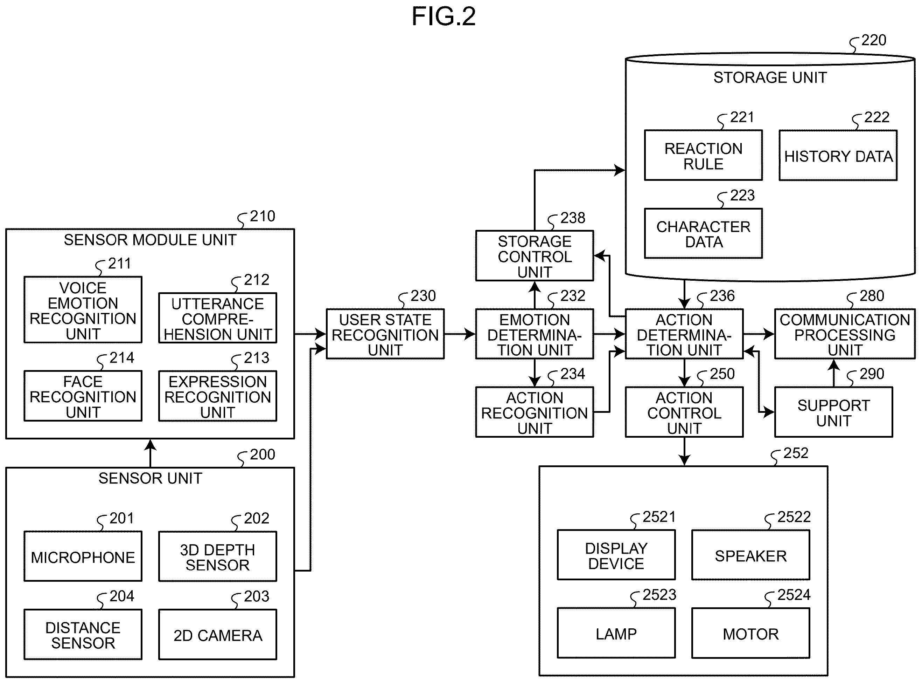

FIG. 2 is a diagram schematically illustrating a functional configuration of the robot 100. The robot 100 includes a sensor unit 200, a sensor module unit 210, a storage unit 220, a user state recognition unit 230, an emotion determination unit 232, an action recognition unit 234, an action determination unit 236, a storage control unit 238, an action control unit 250, a control target 252, a communication processing unit 280, and a support unit 290.

The control target 252 includes a display device 2521, a speaker 2522, a lamp 2523 (for example, an LED for eyes), and motors 2524 that drive parts such as arms, hands, and legs. A posture and gesture of the robot 100 are controlled by controlling the motors 2524 in the parts such as an arm, a hand, and a leg. Some of the emotions of the robot 100 may be expressed by controlling the motors 2524. An expression of the robot 100 can also be expressed by controlling a light emission state of the LED for the eyes of the robot 100. For example, the display device 2521 may be arranged in a chest of the robot 100. Further, the expression of the robot 100 may be expressed by controlling display of the display device 2521. The display device 2521 may display, as texts, contents of conversations with the user 10. Meanwhile, the posture, gesture, and expression of the robot 100 are examples of attitude of the robot 100.

The sensor unit 200 includes a microphone 201, a 3D depth sensor 202, a 2D camera 203, and a distance sensor 204. The microphone 201 continuously detects a voice and outputs voice data. Meanwhile, the microphone 201 may be provided on a head of the robot 100 and may have a function of performing binaural recording. The 3D depth sensor 202 detects a contour of an object by continuously applying an infrared pattern and analyzing the infrared pattern from an infrared image that is continuously captured by an infrared camera. The 2D camera 203 is an example of an image sensor. The 2D camera 203 captures an image with visible light and generates video information of visible light. The contour of the object may be detected from the video information that is generated by the 2D camera 203. The distance sensor 204 detects a distance to an object by applying a laser and an ultrasonic wave, for example. Meanwhile, the sensor unit 200 may further include a clock, a gyro sensor, a touch sensor, a sensor for motor feedback, or the like.

Among the components of the robot 100 illustrated in FIG. 2, the components other than the control target 252 and the sensor unit 200 are examples of components included in an action control system in the robot 100. The action control system of the robot 100 controls the control target 252 as a target.

The storage unit 220 includes a reaction rule 221, history data 222, and character data 223. The history data 222 includes past emotion values and action history of the user 10. The emotion value and the action history are recorded for each user 10 by being associated with identification information of the user 10, for example. At least a part of the storage unit 220 is implemented by a storage medium, such as memory. A person DB that stores a face image of the user 10, attribute information on the user 10, and the like may be included. Among the components of the robot 100 illustrated in FIG. 2, the functions of the components other than the control target 252, the sensor unit 200, and the storage unit 220 may be implemented by a CPU that operates based on a program. For example, the functions of the components may be implemented as operation of the CPU by basic software (OS) and a program that operates on the OS.

The character data 223 is data in which a character and an age are associated with each other. For example, the character is a person or the like that appears in a piece of content, such as an existing animation, a video game, a cartoon, or a movie. Furthermore, the character may be an animal and a plant having a personality, or may be an inanimate object (such as a robot).

For example, the age (use age) associated with the character in the character data 223 is determined based on an age group of a viewer who is assumed as a target of the content in which the character appears.

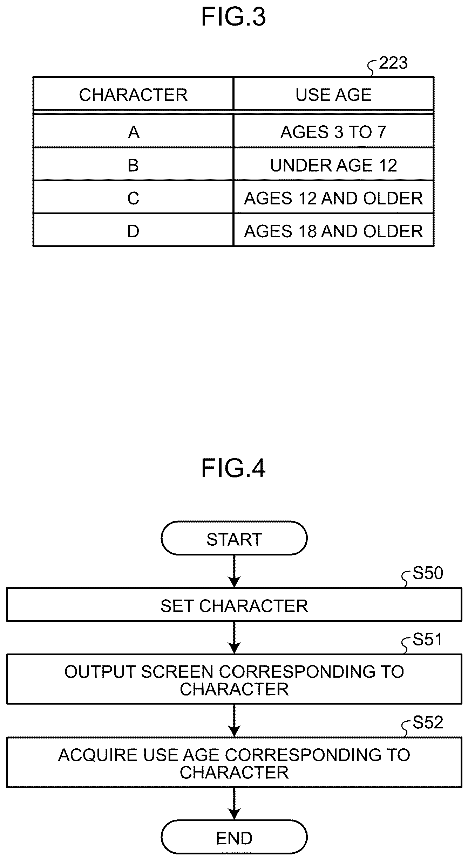

For example, it is assumed that a character "A" appears in an animation for kindergarten children. In this case, as illustrated in FIG. 3, the character "A" is associated with a use age of "ages 3 to 7".

Furthermore, for example, it is assumed that a movie in which a character "C"" appears includes a violent scene and is not suitable for viewing by young children. In this case, as illustrated in FIG. 3, the character "C" is associated with a use age of "ages 12 and older".

The age in the character data 223 may be determined based on an age rating by a rating organization, such as Pan European Game Information (PEGI), a Film Classification and Rating Organization, or a Computer Entertainment Rating Organization (CERO). Furthermore, the use age may be determined by a range, such as "ages 3 to 5" or "ages 12 and older", or may be determined by one value, such as "age 10" or "age 15".

The sensor module unit 210 includes a voice emotion recognition unit 211, an utterance comprehension unit 212, an expression recognition unit 213, and a face recognition unit 214. Information detected by the sensor unit 200 is input to the sensor module unit 210. The sensor module unit 210 analyzes the information detected by the sensor unit 200 and outputs an analysis result to the user state recognition unit 230.

The voice emotion recognition unit 211 of the sensor module unit 210 analyzes a voice of the user 10 detected by the microphone 201 and recognizes an emotion of the user 10. For example, the voice emotion recognition unit 211 extracts a feature, such as a frequency component of the voice, and recognizes the emotion of the user 10 based on the extracted feature. The utterance comprehension unit 212 analyzes the voice of the user 10 detected by the microphone 201 and outputs textual information indicating utterance content of the user 10.

The expression recognition unit 213 recognizes the expression of the user 10 and the emotion of the user 10 from the image of the user 10 captured by the 2D camera 203. For example, the expression recognition unit 213 recognizes the expression and emotion of the user 10 based on shapes, positional relationships, or the like of eyes and a mouth.

The face recognition unit 214 recognizes a face of the user 10. The face recognition unit 214 recognizes the user 10 by checking match between a face image stored in a person DB (not illustrated) and a face image of the user 10 captured by the 2D camera 203.

The user state recognition unit 230 recognizes a state of the user 10 based on the information analyzed by the sensor module unit 210. For example, processing mainly related to perception is performed using the analysis result of the sensor module unit 210. For example, perception information, such as "Daddy is alone" and "Daddy is not smiling with probability of 90%", is generated. Processing of understanding a meaning of the generated perception information is performed. For example, semantic information, such as "Daddy is alone and looks sad", is generated.

The emotion determination unit 232 determines an emotion value indicating the emotion of the user 10 based on the information analyzed by the sensor module unit 210 and the state of the user 10 recognized by the user state recognition unit 230. For example, the information analyzed by the sensor module unit 210 and the recognized state of the user 10 are input to a neural network trained in advance, and an emotion value indicating the emotion of the user 10 is acquired.

Here, the emotion value indicating the emotion of the user 10 is a value indicating whether the emotion of the user 10 is positive or negative. For example, when the emotion of the user is a bright emotion accompanied with pleasure or comfort, such as "delighted", "joyful", "pleasant", "secure", "excited", "relieved", and "fulfilled", the emotion value indicates a positive value that becomes larger as the emotion is brighter. When the emotion of the user 10 is a negative emotion, such as "angry", "sad", "unpleasant", "anxious", "sorrowful", "worried", and "empty", the value indicates a negative value, and an absolute value of the negative value is larger as the user feels more unpleasant. In a case where the emotion of the user 10 is not any of the above ("neutral"), the value indicates a value of 0.

In addition, the emotion determination unit 232 determines an emotion value indicating the emotion of the robot 100 based on the information analyzed by the sensor module unit 210 and the state of the user 10 recognized by the user state recognition unit 230.

The emotion value of the robot 100 includes the emotion value for each of a plurality of emotion classifications, and is, for example, a value (0 to 5) indicating intensity of each of items of "delighted", "angry", "sad", and "joyful".

Specifically, the emotion determination unit 232 determines the emotion value indicating the emotion of the robot 100 in accordance with a rule for updating the emotion value of the robot 100 that is prescribed in association with the information analyzed by the sensor module unit 210 and the state of the user 10 recognized by the user state recognition unit 230.

For example, in a case where the user state recognition unit 230 recognizes that the user 10 looks sad, the emotion determination unit 232 increases the emotion value of "sad" of the robot 100. In a case where the user state recognition unit 230 recognizes that the user 10 is now smiling, the emotion value of "delighted" of the robot 100 is increased.

Meanwhile, the emotion determination unit 232 may determine the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user 10 who desires to continue the dialog even though the remaining battery level is low, the emotion value of "angry" may be increased.

The action recognition unit 234 recognizes an action of the user 10 based on the information analyzed by the sensor module unit 210 and the state of the user 10 recognized by the user state recognition unit 230. For example, the information analyzed by the sensor module unit 210 and the recognized state of the user 10 are input to a neural network trained in advance to acquire a probability of each of a plurality of predetermined action classifications (for example, "smile", "get angry", "ask a question", and "expressing sorrow"), and the action classification having the highest probability is to be recognized as the action of the user 10.

As described above, in the first embodiment, the robot 100 acquires the utterance content of the user 10 after identifying the user 10. In the acquisition and use of the utterance content, the action control system of the robot 100 according to the first embodiment considers protection of personal information and privacy of the user 10 in addition to acquisition of necessary consent according to laws and regulations from the user 10.

Based on the current emotion value of the user 10 determined by the emotion determination unit 232, the history data 222 of past emotion values determined by the emotion determination unit 232 before the current emotion value of the user 10 is determined, and the emotion value of the robot 100, the action determination unit 236 determines an action corresponding to the action of the user 10 recognized by the action recognition unit 234. While the first embodiment will describe a case where the action determination unit 236 uses a single most recent emotion value included in the history data 222 as the past emotion value of the user 10, the disclosed technology is not limited to this embodiment. For example, the action determination unit 236 may use a plurality of most recent emotion values as the past emotion values of the user 10, or may use emotion values that are earlier by a unit period, such as a day before. Furthermore, the action determination unit 236 may determine an action corresponding to the action of the user 10 in further consideration of the history of the past emotion values of the robot 100 in addition to the current emotion value of the robot 100. The action determined by the action determination unit 236 includes a gesture performed by the robot 100 or utterance content of the robot 100.

The action determination unit 236 according to the first embodiment determines the action of the robot 100 as the action corresponding to the action of the user 10 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action determination unit 236 determines an action for changing the emotion value of the user 10 to a positive value as the action corresponding to the action of the user 10.

Meanwhile, the action determination unit 236 may determine an action corresponding to the action of the user 10 based on the emotion of the robot 100. For example, when the emotion value of "angry" or "sad" of the robot 100 has increased in a case where the robot is abused by the user 10, in a case where the user 10 takes an arrogant attitude (that is, in a case where the reaction of the user 10 is unfavorable), in a case where the voice of the user 10 is not detected due to surrounding noise, in a case where the remaining battery level of the robot 100 is low, or the like, the action determination unit 236 may determine an action corresponding to the increase in the emotion value of "angry" or "sad" as the action corresponding to the action of the user 10. In addition, in a case where the emotion value of "delighted" or "joyful" of the robot 100 has increased in a case where the reaction of the user 10 is favorable, in a case where the remaining battery level of the robot 100 is high, or the like, the action determination unit 236 may determine an action corresponding to the increase in the emotion value of "delighted" or "joyful" as an action corresponding to the action of the user 10. The action determination unit 236 may determine an action different from the action for the user 10 that has increased the emotion values of "angry" and "sad" of the robot 100, as an action for the user 10 that has increased the emotion values of "delighted" and "joyful" of the robot 100. In this manner, the action determination unit 236 may determine various actions depending on the emotion of the robot 100 itself or how the user 10 has changed the emotion of the robot 100 by the action of the user 10.

The reaction rule 221 defines the action of the robot 100 corresponding to the combination of the past emotion value and the current emotion value of the user 10, the emotion value of the robot 100, and the action of the user 10. For example, in a case where the past emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns being the fourth power of six values, namely, values "0" to "5" of "delighted", "angry", "sad", and "joyful"), the pattern of the combination of the past emotion value and the current emotion value of the user 10, and the action pattern of the user 10. Specifically, for each pattern of the emotion value of the robot 100, the action of the robot 100 corresponding to the action pattern of the user 10 is determined for each of the combinations, such as the case where the combination of the past emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic, such as "I want to talk about the topic I discussed earlier", for example, the action determination unit 236 may transition to an operation mode of determining the action of the robot 100 using the history data 222.

Meanwhile, the reaction rule 221 may prescribe at least one of a gesture and statement content as an action of the robot 100 for each of the patterns (1296 patterns) of the emotion value of the robot 100 at the maximum. Alternatively, the reaction rule 221 may prescribe at least one of a gesture and statement content as an action of the robot 100 for each of groups of the patterns of the emotion values of the robot 100.

Intensity of a gesture is prescribed for each gesture included in the action of the robot 100 prescribed in the reaction rule 221. Intensity of utterance content is prescribed for each utterance content included in the action of the robot 100 prescribed in the reaction rule 221.

The storage control unit 238 determines whether to store data including the action of the user 10 in the history data 222 based on the intensity of the action prescribed for the action determined by the action determination unit 236 and the emotion value of the robot 100 determines by the emotion determination unit 232.

Specifically, in a case where the total value of the sum of the emotion values for each of the emotion classifications of the robot 100 and the intensity that is the sum of the intensity determined in advance for the gesture included in the action determined by the action determination unit 236 and the intensity determined in advance for the utterance content included in the action determined by the action determination unit 236 is equal to or larger than a threshold, it is determined that data including the action of the user 10 is stored in the history data 222.

When determining that the data including the action of the user 10 is stored in the history data 222, the storage control unit 238 stores the action determined by the action determination unit 236, information (for example, any peripheral information including data such as a voice, an image, or a smell of the place) analyzed by the sensor module unit 210 from a current time point to a certain period before, and the state of the user 10 (for example, the expression and the emotion of the user 10) recognized by the user state recognition unit 230 in the history data 222.

The action control unit 250 controls the control target 252 based on the action determined by the action determination unit 236. For example, when the action determination unit 236 has determined an action including utterance, the action control unit 250 causes a speaker included in the control target 252 to output a voice. At this time, the action control unit 250 may determine a speech speed of the voice based on the emotion value of the robot 100. For example, the action control unit 250 determines the speech speed such that an utterance speed increases with increase in the emotion value of the robot 100. In this manner, the action control unit 250 determines an execution mode of the action determines by the action determination unit 236 based on the emotion value determined by the emotion determination unit 232.

The action control unit 250 may recognize a change in the emotion of the user 10 about the execution of the action determined by the action determination unit 236. For example, the change in the emotion may be recognized based on a voice or an expression of the user 10. In addition, the change in the emotion of the user 10 may be recognized based on detection of an impact by the touch sensor included in the sensor unit 200. In a case where an impact is detected by the touch sensor included in the sensor unit 200, it is allowable to recognize that the emotion of the user 10 is worsened, or in a case where it is determined that the reaction of the user 10 is smiling or delighted from the detection result of the touch sensor included in the sensor unit 200, it is allowable to recognize that the emotion of the user 10 is improved. Information indicating the reaction of the user 10 is output to the communication processing unit 280.

Furthermore, after the action control unit 250 executes the action determined by the action determination unit 236 in the execution mode that is determined in accordance with the emotion of the robot 100, the emotion determination unit 232 further changes the emotion value of the robot 100 based on the reaction of the user 10 to the execution of the action. Specifically, in a case where the reaction of the user 10 to the action that is determined by the action determination unit 236 and that is performed for the user in the execution mode determined by the action control unit 250 is not bad, the emotion determination unit 232 increases the emotion value of "delighted" of the robot 100, and, in a case where the reaction of the user 10 to the action that is determined by the action determination unit 236 and that is performed for the user in the execution mode determined by the action control unit 250 is bad, the emotion determination unit 232 increases the emotion value of "sad" of the robot 100.

Furthermore, the action control unit 250 expresses the emotion of the robot 100 based on the determined emotion value of the robot 100. For example, when having increased the emotion value of "delighted" of the robot 100, the action control unit 250 controls the control target 252 to cause the robot 100 to make a gesture of delight. Moreover, when having increased the emotion value of "sad" of the robot 100, the action control unit 250 controls the control target 252 such that the posture of the robot 100 takes a head lowering posture.

The communication processing unit 280 is responsible for communication with the server 300. As described above, the communication processing unit 280 transmits the user reaction information to the server 300. Furthermore, the communication processing unit 280 receives the updated reaction rule from the server 300. When having received the updated reaction rule from the server 300, the communication processing unit 280 updates the reaction rule 221.

The support unit 290 implements the above-described learning support function. Details of the support unit 290 will be described later.

The server 300 performs communication between the robot 100, the robot 101, the robot 102, and the server 300, receives the user reaction information transmitted from the robot 100, and updates the reaction rule based on the reaction rule including the action for which a positive reaction has been obtained.

### Action determination based on character

A case has been described in which the action determination unit 236 determines the action of the robot 100 based on the state that is recognized by the user state recognition unit 230. In contrast, the action determination unit 236 may determines the action of the robot 100 based on not only the state of the user but also a character that has been set. At this time, the action determination unit 236 may acquire the age (use age) associated with the character from the character data 223, and determines the action of the robot 100 based on the acquired use age.

Specifically, the action determination unit 236 determines the action of the robot 100 based on the state recognized by the user state recognition unit 230 and based on the character that has been set or the age associated with the character. This configuration enables the robot 100 to execute an appropriate action according to the age of the user. In particular, it is possible to restrict actions by the robot 100 that are not suitable for younger users (for example, outputting violent content).

In the system 5, a character is set in advance. Setting of the character is input as a prompt (instruction). The input of the prompt may be performed via an input device provided in the robot 100 or may be performed via an external device, such as a server, that is communicably connected to the robot 100. Furthermore, in the prompt, a name of a character may be specified, or an ID determined for each character may be designated.

For example, the action determination unit 236 determines an action of outputting a screen indicating the appearance of the character or a color according to the character on the display device 2521 (an example of an output device) provided on the robot. The color corresponding to the character is a theme color or the like that is associated with the character. This makes it possible for the user to obtain a feeling of having a dialog with the character.

Furthermore, for example, the action determination unit 236 determines an action of outputting information to the display device 2521 or the speaker 2522 (an example of an output device) provided in the robot 100 by a mode according to the use age. For example, the action determination unit 236 changes the voice of the robot 100 emitted from the speaker 2522 to a tone of the character.

Moreover, for example, the action determination unit 236 determines an action of outputting a voice or a message by a text using words corresponding to the use age. Here, it is assumed that usable words for each age are set in advance. The action determination unit 236 acquires the use age from the character data 223.

For example, it is assumed that words "What's wrong?" and "Is there anything I can do for you?" are stored in the storing unit 220 in advance as words to be output when the robot 100 selects the action of "offering words". Furthermore, it is assumed that the age of "ages under 12" is associated with "What's wrong?" and the age of "ages 12 and older" is associated with "Is there anything I can do for you?". For example, the action determination unit 236 determines that the word "Is there anything I can do for you?" is output when the use age corresponds to "ages 18 and older". For example, the action determination unit 236 determines that the word "What's wrong?" is output when the use age corresponds to "ages 3 to 7".

In this manner, by changing the tone of the voice and the words to be output in accordance with the use age, it is possible to improve the familiarity for the user of the younger age while restricting the action not suitable for the user of the younger age in particular.

Furthermore, the action determination unit 236 determines an action of outputting content corresponding to the character to an output device (such as the display device 2521) provided in the robot 100. For example, the action determination unit 236 determines an action of displaying, on the display device 2521, video content (such as movies and animations) in which a character appears.

Moreover, the action determination unit 236 may determine an action of outputting educational content according to the use age. Here, the educational content is text, video, and voice related to learning subjects, such as English, arithmetic, National language, science, and society. Furthermore, the educational content may be interactive content that allows the user to input their answer to a problem. For example, the action determination unit 236 determines an action of displaying text of a calculation problem corresponding to a grade corresponding to the use age on the display device 2521. For example, the action determination unit 236 determines that an addition problem is displayed when the use age is "ages under 8", and determines that a multiplication problem is displayed when the use age is "ages 8 and older".

Moreover, the action determination unit 236 may determine an action of outputting content corresponding to the use age rather than a character to the output device provided in the robot 100. The content in this case may be a piece of content in which a character appears, or may be a piece of content that does not depend on a character, such as a generally known folk tale or fairy tale.

The content corresponding to a character, and the grade and educational content according to the use age may be stored in the storing unit 220 in advance, or may be acquired from an external device, such as a server, that is communicably connected to the robot 100.

FIG. 4 is a diagram schematically illustrating an example of an operation flow related to setting of a character. Note that "S" in the operation flow represents a step to be executed.

At Step S50, the robot 100 receives character setting. At Step S51, the robot 100 outputs a screen (for example, a screen displaying an appearance of a character) corresponding to the character.

At Step S52, the action determination unit 236 acquires the use age corresponding to the character that has been set, from the character data 223.

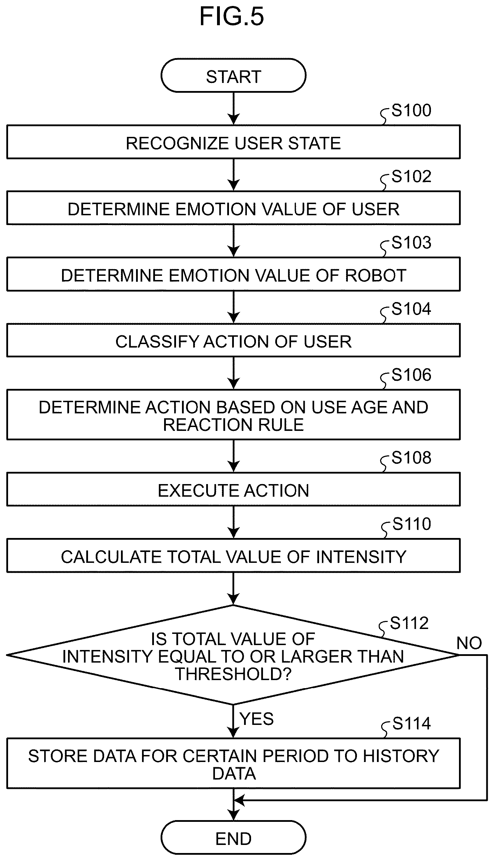

FIG. 5 is a diagram schematically illustrating an example of an operation flow performed by the robot 100. The operation flow illustrated in FIG. 5 is repeatedly executed. At this time, it is assumed that information analyzed by the sensor module unit 210 is input. Note that "S" in the operation flow represents a step to be executed.

First, at Step S100, the user state recognition unit 230 recognizes the state of the user 10 based on the information analyzed by the sensor module unit 210.

At Step S102, the emotion determination unit 232 determines an emotion value indicating the emotion of the user 10 based on the information analyzed by the sensor module unit 210 and the state of the user 10 recognized by the user state recognition unit 230.

At Step S103, the emotion determination unit 232 determines an emotion value indicating the emotion of the robot 100 based on the information analyzed by the sensor module unit 210 and the state of the user 10 recognized by the user state recognition unit 230. The emotion determination unit 232 adds the determined emotion value of the user 10 to the history data 222.

At Step S104, the action recognition unit 234 recognizes the action classification of the user 10 based on the information analyzed by the sensor module unit 210 and the state of the user 10 recognized by the user state recognition unit 230.

At Step S106, the action determination unit 236 determines the action of the robot 100 based on the use age acquired at Step S52 in FIG. 4, the combination of the current emotion value of the user 10 determined at Step S102 in FIG. 5 and the past emotion value included in the history data 222, the emotion value of the robot 100, the action of the user 10 recognized by the action recognition unit 234, and the reaction rule 221.

At Step S108, the action control unit 250 controls the control target 252 based on the action determined by the action determination unit 236.

At Step S110, the storage control unit 238 calculates a total value of the intensity based on the intensity of the action that is determined in advance for the action determined by the action determination unit 236 and the emotion value of the robot 100 determined by the emotion determination unit 232.

At step S112, the storage control unit 238 determines whether the total value of the intensity is equal to or larger than a threshold. In a case where the total value of the intensity is smaller than the threshold, the data including the action of the user 10 is not stored in the history data 222, and the processing is terminated. In contrast, when the total value of the intensity is equal to or larger than the threshold, the process proceeds to step S114.

At step S114, the action determined by the action determination unit 236, the information analyzed by the sensor module unit 210 from the current time point to a certain period before, and the state of the user 10 recognized by the user state recognition unit 230 are stored in the history data 222.

As described above, according to the robot 100, the emotion value indicating the emotion of the robot 100 is determined based on the user state, and whether to store data including the action of the user 10 in the history data 222 is determined based on the emotion value of the robot 100. This makes it possible to suppress the capacity of the history data 222 that stores data including the action of the user 10. In addition, for example, when the robot 100 determines, after 10 years, that the user state is the same as the user state at 10 years before, the robot 100 reads the history data 222 of 10 years before, and thus, can present, to the user 10, the state of the user 10 at 10 years before (for example, the expression, emotion, and the like of the user 10), and can further present any peripheral information, such as data of a voice, an image, and a smell, at the situation.

Furthermore, according to the robot 100, it is possible to cause the robot 100 to execute an appropriate action in response to the action of the user 10. In known technologies, an action of the user is classified to determine an action of the robot including an expression or an appearance of the robot. In contrast, the robot 100 determines the current emotion value of the user 10, and executes an action for the user 10 based on the past emotion value and the current emotion value. Therefore, for example, in a case where the user 10 who looked happy the day before is depressed the next day, the robot 100 is able to make an utterance such as "You looked happy yesterday. What's wrong with you today?". Moreover, the robot 100 is also able to make an utterance with a gesture. Furthermore, for example, in a case where the user 10 who was depressed the day before looks happy the next day, the robot 100 is able to make an utterance such as "You were depressed yesterday, but you look happy today, don't you?". Moreover, for example, in a case where the user 10 who looked happy yesterday looks happier the next day than the day before, the robot 100 is able to make an utterance such as "You look happier today than yesterday. Did something good happen to you more than yesterday?" Furthermore, when the user 10 has an emotion value of 0 or more and is continuously in a state where the fluctuation range of the emotion value is within a certain range, for example, the robot 100 is able to make an utterance such as "Recently, you are stably in good mood." for the user 10.

Moreover, for example, in a case where the robot 100 asks the user 10 a question "Have you finished the homework you mentioned yesterday?" and an answer of "I have finished it" is obtained from the user 10, the robot 100 is able to make a positive utterance such as "Good for you!" and make a positive gesture such as applause or thumbs-up. Furthermore, for example, when the user 10 utters "The presentation we discussed the day before yesterday went well", the robot 100 is able to make a positive utterance such as "Good job!" and also make the above positive gesture. In this manner, by the action taken by the robot 100 based on the history of the state of the user 10, it is expected that the user 10 feels a sense of closeness to the robot 100.

In the embodiment as described above, the case has been described in which the robot 100 recognizes the user 10 using the face image of the user 10, but the disclosed technology is not limited to this aspect. For example, the robot 100 may recognize the user 10 using a voice uttered by the user 10, a mail address of the user 10, an ID of an SNS of the user 10, an ID card incorporating a wireless IC tag possessed by the user 10, or the like.

### Support unit 290

The support unit 290 will be described in detail. Here, the support unit 290 is provided in the robot 100 and causes the robot 100 to output information corresponding to a detected learning status.

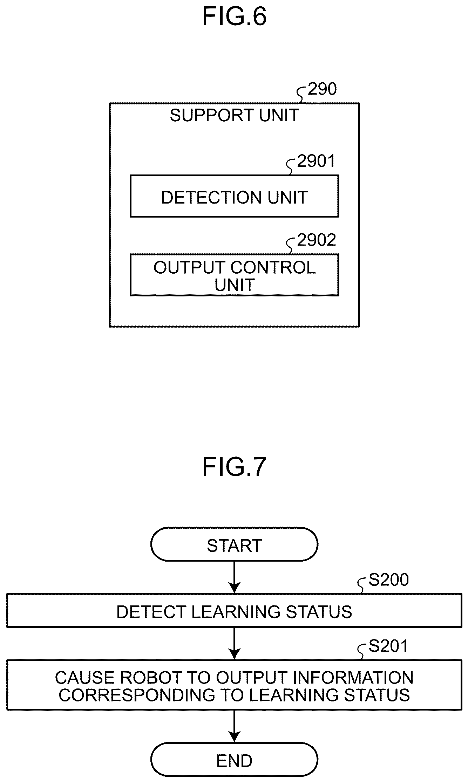

As illustrated in FIG. 6, the support unit 290 includes a detection unit 2901 and an output control unit 2902.

Each of components of the support unit 290 is implemented by causing a CPU to operate based on a program. For example, functions of the components may be implemented as the operation of the CPU by basic software (OS) and a program that operates on the OS.

The detection unit 2901 detects a learning status of the user 10 in various fields of study. Further, the output control unit 2902 causes the robot 100 including the text generation model to output, to the user 10, information corresponding to the learning status detected by the detection unit 2901.

For example, the detection unit 2901 identifies a field of study corresponding to the age of the user 10, and detects a learning status in the identified field of study. For example, when the user 10 is in the third grade, the detection unit 2901 detects a learning level in the field of study corresponding to the third or lower grade. For example, the detection unit 2901 detects daily homework or test scores by image analysis. Further, the detection unit 2901 detects information, such as an expression or a tone of voice, of the user 10 when the output control unit 2902 outputs the information, and estimates a level of understanding of the user 10 about the output information. Furthermore, the detection unit 2901 estimates a problem-solving ability and a logical thinking ability in arithmetic (mathematic) or a reading comprehension ability and a writing ability in Japanese class based on the detected learning status.

Moreover, the output control unit 2902 causes the robot 100 to output information corresponding to the learning status detected by the detection unit 2901. For example, the output control unit 2902 changes explanation and a teaching method in the field of study in accordance with the detected learning level. Furthermore, the output control unit 2902 controls output of information in accordance with the level of understanding estimated by the detection unit 2901 and the change in the emotion of the user 10. With this configuration, it is possible to follow up on a part that is not fully understood with consideration for not hurting the self-esteem of the user 10 (with high level of understanding and while preventing the user 10 from turning into negative emotions). Moreover, when the problem-solving ability and the logical thinking ability in arithmetic (mathematic) are low (for example, when scoring is performed and scores are lower than a threshold), the output control unit 2902 controls output of information for improving the problem-solving ability and the logical thinking ability. Furthermore, when the reading comprehension ability and the writing ability in Japanese class are low, the output control unit 2902 controls output of information for improving the reading comprehension ability and the writing ability. For example, the output control unit 2902 controls output of information for improving an expressive ability and communication skills in accordance with a level of understanding of the user 10 about a sentence structure and vocabulary. Moreover, the output control unit 2902 controls output of information in accordance with an individual learning style and a level of understanding of the user 10. With this configuration, it is possible to allow the user 10 to learn arithmetic and Japanese class while staying motivated and having fun.

Furthermore, the detection unit 2901 detects interest of the user 10 in an unfamiliar field of study from, for example, conversations with the user 10. Moreover, the output control unit 2902 causes the robot 100 to output information on the detected field of study of interest. Furthermore, the detection unit 2901 detects a level of understanding of the user 10 about the information output by the output control unit 2902 and a change in the emotion of the user 10. The output control unit 2902 controls output of information in accordance with the detected level of understanding and the change in the emotion. With this configuration, for example, it is possible to manage motivation of the user 10 who learns a field of study, such as a data science, for which a large amount of time and effort are needed, and provide appropriate learning resources. For example, the learning resources include a method for enhancing understanding of basic principles of data analysis and machine learning, information on learning through practical projects, and the like.

Moreover, the detection unit 2901 detects a learning status in a field of study, such as art or music, that may be enjoyed by a broad age range (that can generally be enjoyed by all ages from children to adults) and that is related to sensitivity, such as creativity. Furthermore, the output control unit 2902 causes the robot 100 to output information on the field of study related to the sensitivity in accordance with the learning status detected by the detection unit 2901. Moreover, the output control unit 2902 outputs information corresponding to interest or a goal in the field of study for each of the users 10. With this configuration, it is possible to boost passion for art and music. Furthermore, the output control unit 2902 is able to contribute to maintenance of motivation of the user 10 by outputting information by using an emotion engine.

Moreover, the detection unit 2901 detects a learning status for a test coverage of the user 10 who takes a test. Furthermore, the detection unit 2901 causes the robot 100 to output information corresponding to the detected learning status. The user 10 who takes a test is, for example, an exam candidate for an entrance examination or the user 10 who takes a test or a mock test in a school. For example, the output control unit 2902 outputs, to an exam candidate who will take a university entrance examination, information on the university entrance examination (school information, entrance examination information, or past exam collections of a preferred school) or information for supporting scheduling of a learning plan until the entrance examination. This contributes to optimization of test-taking methods and improvement in passing rates. Furthermore, the output control unit 2902 is able to contribute to maintenance of motivation of the exam candidate by outputting information by using an emotion engine.

FIG. 7 is a diagram schematically illustrating an example of an operation flow performed by the support unit 290. First, the support unit 290 detects a learning status of the user 10 in the field of study (Step S200). Then, the support unit 290 causes the robot 100 including the text generation model to output information corresponding to the detected learning status to the user 10 (Step S201), and the processing is terminated.

The robot 100 is an example of an electronic device including an action control system. An application target of the action control system is not limited to the robot 100, and the action control system may be applied to various kinds of electronic devices. Furthermore, the function of the server 300 may be implemented by one or more computers. At least a part of the functions of the server 300 may be implemented by a virtual machine. In addition, at least a part of the functions of the server 300 may be implemented in a cloud.

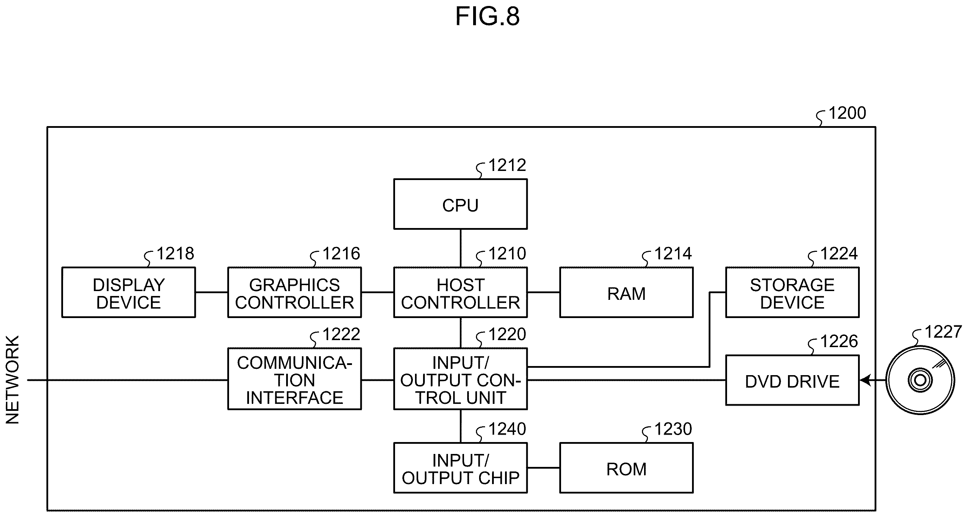

FIG. 8 is a diagram schematically illustrating an example of a hardware configuration of a computer 1200 that functions as the robot 100 and the server 300. A program installed in the computer 1200 is able to cause the computer 1200 to function as one or more "units" of the apparatus according to the present embodiment, or cause the computer 1200 to execute an operation associated with the apparatus according to the present embodiment or to implement the one or more "unit", and/or cause the computer 1200 to execute a process according to the present embodiment or a stage of the process. The program as described above may be executed by a CPU 1212 to cause the computer 1200 to perform certain operation associated with some or all of the blocks in the flowcharts and block diagrams described in the present specification.

The computer 1200 according to the present embodiment includes the CPU 1212, a RAM 1214, and a graphics controller 1216 that are connected to one another by a host controller 1210. The computer 1200 further includes input/output units such as a communication interface 1222, a storage device 1224, a DVD drive 1226, and an IC card drive that are connected to the host controller 1210 via an input/output control unit 1220. The DVD drive 1226 may be a DVD-ROM drive, a DVD-RAM drive, or the like. The storage device 1224 may be a hard disk drive, a solid state drive, or the like. The computer 1200 further includes a legacy input/output unit such as a ROM 1230 and a keyboard that are connected to the input/output control unit 1220 via an input/output chip 1240.

The CPU 1212 operates in accordance with a program stored in the ROM 1230 and the RAM 1214 and controls each of the units. The graphics controller 1216 acquires image data generated by the CPU 1212 in a frame buffer or the like provided in the RAM 1214 or directly in the RAM 1214, and causes the image data to be displayed on a display device 1218.

The communication interface 1222 communicates with other electronic devices via a network. The storage device 1224 stores a program and data used by the CPU 1212 in the computer 1200. The DVD drive 1226 reads a program or data from a DVD-ROM 1227 or the like and provides the read program or data to the storage device 1224. The IC card drive reads a program and data from an IC card and/or writes a program and data to the IC card.

The ROM 1230 stores therein a boot program and the like executed by the computer 1200 at the time of activation, and/or a program dependent on hardware of the computer 1200. The input/output chip 1240 may connect various input/output units to the input/output control unit 1220 via a USB port, a parallel port, a serial port, a keyboard port, a mouse port, or the like.

The program is provided by a computer-readable storage medium such as the DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in the programs is read by the computer 1200 and provide a linkage between the programs and various kinds of hardware resources described above. The apparatus or method may be configured by implementing operation or processing on information in accordance with use of the computer 1200.

For example, when communication is performed between the computer 1200 and an external apparatus, the CPU 1212 may execute a communication program loaded on the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network into a reception buffer area or the like provided on the recording medium.

In addition, the CPU 1212 may allow the RAM 1214 to read all or a necessary portion of a file or database stored in an external recording medium such as the storage device 1224, the DVD drive 1226 (the DVD-ROM 1227), or the IC card, and may execute various kinds of processing on data on the RAM 1214. Next, the CPU 1212 may perform write-back of the processed data to the external recording medium.

Various kinds of information, such as various kinds of programs, data, tables, and databases, may be stored in a recording medium and subjected to information processing. The CPU 1212 may execute various kinds of processing on data read from the RAM 1214, including various kinds of operation, information processing, condition determination, conditional branching, unconditional branching, information search/replacement, and the like, which are described throughout the present disclosure and designated by a command sequence of a program, and writes back the results of processing to the RAM 1214. In addition, the CPU 1212 may search for information in a file, a database, or the like in the recording medium. For example, when a plurality of entries, each having an attribute value of a first attribute associated with an attribute value of a second attribute, is stored in the recording medium, the CPU 1212 may search for an entry in which the attribute value of the first attribute matches a designated condition from the plurality of entries, read the attribute value of the second attribute stored in the entry, and acquire the attribute value of the second attribute associated with the first attribute satisfying the predetermined condition.

The above-described program or software modules may be stored in a computer-readable storage medium on the computer 1200 or in the vicinity of the computer 1200. Furthermore, a recording medium such as a hard disk or RAM provided in a server system connected to a dedicated communication network or the Internet may be used as a computer-readable storage medium, and provides the program to the computer 1200 via the network.

The blocks in the flowcharts and block diagrams in the present embodiment may represent stages of a process in which an operation is performed or "units" of an apparatus that are responsible for performing the operation. Specific stages and "units" may be implemented by dedicated circuits, programmable circuits provided together with computer-readable instructions stored on a computer-readable storage medium, and/or by a processor provided together with computer-readable instructions stored on a computer-readable storage medium. Dedicated circuits may include digital and/or analog hardware circuits, and may include integrated circuits (ICs) and/or discrete circuits. Programmable circuits may include reconfigurable hardware circuits including, for example, logical conjunction, logical disjunction, exclusive OR, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, and as a result, the computer-readable storage medium including instructions stored in the device is to have a product including instructions that may be executed to create means for executing operations designated in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), a digital versatile disk (DVD), a Blu-ray (registered trademark) disk, a memory stick, and an integrated circuit card.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk, JAVA (registered trademark), and C++, and conventional procedural programming languages, such as the "C" programming language or similar programming languages.

The computer-readable instructions may be provided for a processor or programmable circuits of a general purpose computer, special purpose computer, or other programmable data processing apparatus, either locally or over a local area network (LAN), a wide area network (WAN) such as the Internet so as to cause the processor or programmable circuits of the general purpose computer, special purpose computer, or other programmable data processing apparatus to execute the computer-readable instructions in order to generate means to execute the operations designated in the flowcharts or block diagrams. Examples of the processor include a computer processor, a processing unit, a microprocessor, a digital signal processor, a controller, and a microcontroller.

### Other embodiments

The robot 100 described above may be mounted on a stuffed toy, or may be applied to a control device connected by a wireless or wired link to a control target device (speaker or camera) mounted on the stuffed toy.

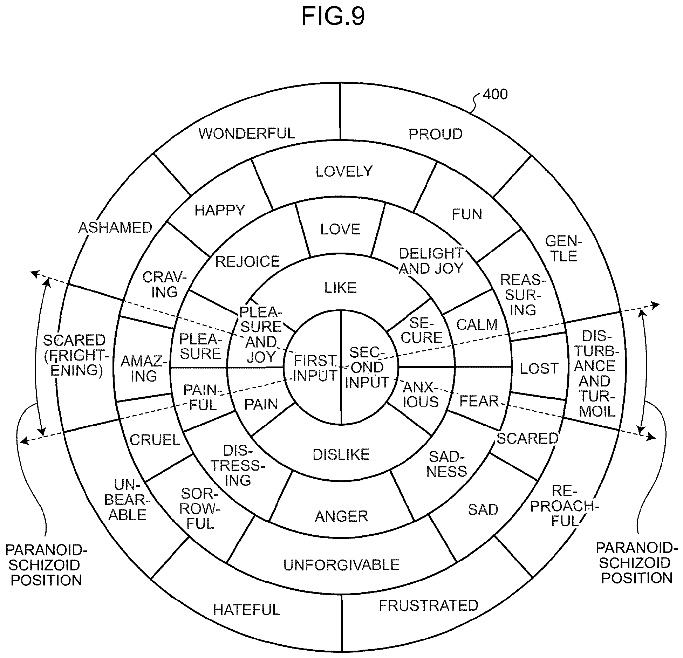

The emotion determination unit 232 may determine the emotion of the user 10 in accordance with a specific mapping. Specifically, the emotion determination unit 232 may determine the emotion of the user 10 based on an emotion map (see FIG. 9) that is a specific mapping.

FIG. 9 is a diagram illustrating an emotion map 400 on which a plurality of emotions is mapped. On the emotion map 400, emotions are mapped concentrically radially from the center. The closer to the center of the concentric circle, the more the emotion disposed is toward a primitive state. Emotions indicating states and actions generated from the state of mind are disposed toward the outer side of the concentric circle. The emotion is a concept including an affect and a mental state. The left side of the concentric circle generally includes emotions generated from reactions occurring in the brain. The right side of the concentric circle generally includes emotions induced by situational judgment. The upper and lower directions of the concentric circle generally include emotions generated from reactions occurring in the brain and induced by situational judgment. Furthermore, the upper side of the concentric circle includes "pleasant" emotions while the lower side of the concentric circle includes "unpleasant" emotions. In this manner, the emotion map 400 is a map on which a plurality of emotions is mapped based on a structure of generating emotions, and emotions that are likely to occur at the same time are mapped close to each other.
(1) For example, in a case where the emotion engine, which is the emotion determination unit 232 of the robot 100, detects an emotion at about 100 msec, determination of reaction operation (for example, affirmative interjection) of the robot 100 may be performed at a timing at which the frequency is at least similar to a detection frequency (100 msec) of the emotion engine, or may be performed at a timing earlier than this. The detection frequency of the emotion engine may be construed as a sampling rate.
   The emotion is detected in about 100 msec, and the reaction operation (for example, affirmative interjection) is immediately performed in conjunction with the detection, which makes it possible to achieve a dialogue reading the situation instead of giving a strange affirmative interjection. The robot 100 performs a reaction operation (affirmative interjection or the like) in accordance with the directionality and the degree (intensity) of a mandala-like chart of the robot emotion map 400. The detection frequency (sampling rate) of the emotion engine is not limited to 100 ms, and may be changed depending on the situation (such as when playing sports), the age of the user 10, or the like.
(2) With reference to the emotion map 400, the directionality and the degree of intensity of the emotion may be set in advance to set a motion of the affirmative interjection and a magnitude of the affirmative interjection. For example, in a case where the robot 100 feels a sense of stability, security, or the like, the robot 100 continues listening to the talk while nodding. When the robot 100 feels anxious, lost, or suspicious, the robot 100 may tilt its head or stop nodding.
   The emotions as described above are distributed in the 3 o'clock direction of the emotion map 400, and usually wander between security and anxiety. In the right half of the emotion map 400, situational awareness is stronger than internal sensation, and thus gives a calm impression.
(3) When the robot 100 feels good after being complimented, a filler "Wow" may come before the words; when the robot feels heavy after receiving harsh words, a filler "Ohh!" may come before the words. In addition, a physical reaction such as a gesture of the robot 100 crouching while saying "Ohh!" may be included. These emotions are distributed around 9 o'clock on the emotion map 400.
(4) In the left half of the emotion map 400, internal sensation (reaction) is stronger than situational awareness. Therefore, an impression of unintentional reaction can be given.

In a case where the robot 100 has a favorable feeling in situational awareness while having an internal feeling (reaction) of satisfaction, the robot 100 may nod deeply while looking at the other party, or may utter "Yeah". In this manner, the robot 100 may generate a balanced favorable feeling to the other party, that is, an action such as tolerance or generosity to the other party. Such emotions are distributed around 12 o'clock on the emotion map 400.

On the contrary, when the robot 100 has an internal feeling (reaction) of unpleasant feeling and also has negative feelings as situational awareness, the robot 100 may shake its head when feeling antipathy, and may stare at the other party with LED eyes turned into red when the robot 100 has a feeling close to hatred. Such emotions are distributed around 6 o'clock on the emotion map 400.

(5) Since the inner side of the emotion map 400 represents the inside of the mind and the outer side of the emotion map 400 represents an action, the emotion is more visible (appears in the action) toward the outer side of the emotion map 400.

(6) In a case where the robot 100 listens to a person's speech while feeling the sense of security distributed around 3 o'clock on the emotion map 400, the robot slightly nods with a sound "uh-huh". However, in the direction of love around 12 o'clock, the robot may perform strong and deep nodding.

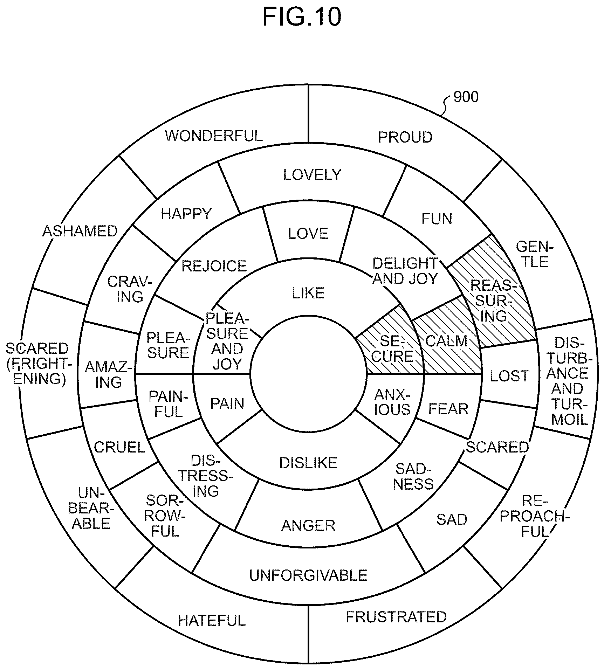

The emotion determination unit 232 inputs the information analyzed by the sensor module unit 210 and the recognized state of the user 10 to a neural network trained in advance, acquires an emotion value indicating each emotion illustrated on the emotion map 400, and determines the emotion of the user 10. The neural network is trained in advance based on a plurality of pieces of learning data including a combination of the information analyzed by the sensor module unit 210 and the recognized state of the user 10 and the emotion value indicating each emotion illustrated on the emotion map 400. Furthermore, as in an emotion map 900 illustrated in FIG. 10, the neural network is trained to allow emotions disposed close to each other to have close values. FIG. 10 is a diagram illustrating another example of the emotion map. FIG. 10 illustrates an example in which a plurality of emotions such as "secure", "calm", and "reassuring" have emotion values close to each other.

Furthermore, the emotion determination unit 232 may determine the emotion of the robot 100 in accordance with a specific mapping. Specifically, the emotion determination unit 232 inputs the information analyzed by the sensor module unit 210, the state of the user 10 recognized by the user state recognition unit 230, and the state of the robot 100 to a neural network trained in advance, acquires an emotion value indicating each emotion illustrated on the emotion map 400, and determines the emotion of the robot 100. The neural network is trained in advance based on a plurality of pieces of learning data including a combination of the information analyzed by the sensor module unit 210, the recognized state of the user 10, and the state of the robot 100, and the emotion value indicating each emotion illustrated on the emotion map 400. For example, the neural network is trained based on learning data indicating that the emotion value "3" of "happy" is obtained in a case where the robot 100 is recognized as being petted by the user 10 from the output of a touch sensor 207, and learning data indicating that the emotion value "3" of "anger" is obtained in a case where the robot 100 is recognized as being hit by the user 10 from the output of an acceleration sensor 205. Furthermore, as in the emotion map 900 illustrated in FIG. 10, the neural network is trained to allow emotions disposed close to each other to have close values.

Moreover, the emotion determination unit 232 may determine the emotion of the robot 100 based on the action content of the robot 100 generated by the text generation model. Specifically, the emotion determination unit 232 inputs the action content of the robot 100 generated by the text generation model to the neural network trained in advance, acquires the emotion value indicating each emotion illustrated on the emotion map 400, integrates the acquired emotion value indicating each emotion and the emotion value indicating each emotion of the current robot 100, and updates the emotion of the robot 100. For example, the acquired emotion value indicating each emotion and the emotion value indicating each emotion of the current robot 100 are averaged and integrated. The neural network is trained in advance based on a plurality of pieces of learning data that is a combination of text representing the action content of the robot 100 generated by the text generation model and the emotion value indicating each emotion illustrated on the emotion map 400.

For example, there is a case where utterance content of the robot 100 "Good for you. Lucky you." is obtained as the action content of the robot 100 generated by the text generation model. In this case, the emotion of the robot 100 is updated such that, when the text representing the utterance content is input to the neural network, a high value is obtained as the emotion value of the emotion "happy" to increase the emotion value of the emotion "happy".

The action determination unit 236 adds a fixed sentence for asking a question about the action content of the robot 100 corresponding to the action of the user 10 to the text representing the action of the user 10, the emotion of the user 10, and the emotion of the robot 100, and inputs the obtained text to the text generation model having a dialogue function, to thereby generate the action content of the robot 100.

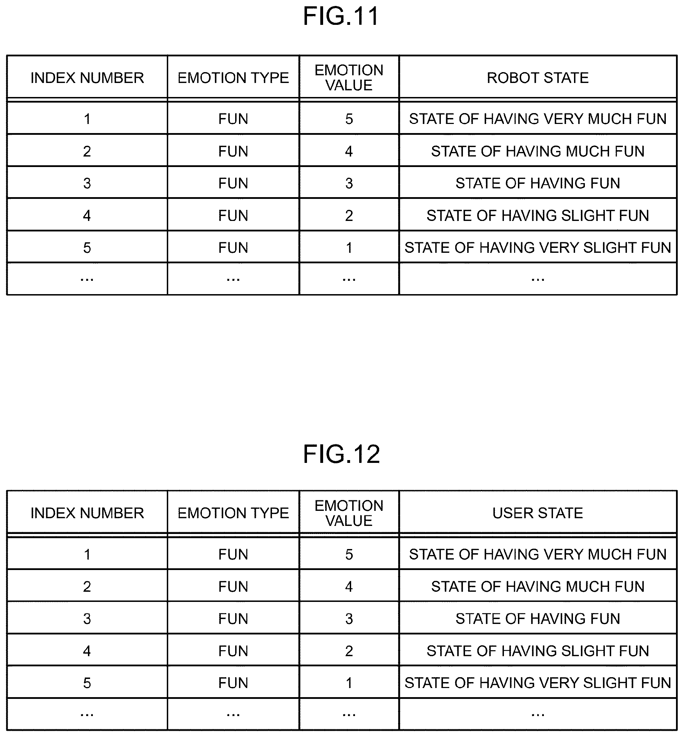

For example, the action determination unit 236 uses an emotion table as illustrated in FIG. 11 to acquire a text indicating the state of the robot 100 from the emotion of the robot 100 determined by the emotion determination unit 232. FIG. 11 is a diagram illustrating an example of the emotion table. Here, in the emotion table, an index number is assigned to each emotion value for each type of emotion, and a text indicating the state of the robot 100 is stored for each index number.

In a case where the emotion of the robot 100 determined by the emotion determination unit 232 corresponds to the index number "2", a text "state of having much fun" is obtained. Note that, in a case where the emotion of the robot 100 corresponds to a plurality of index numbers, a plurality of texts indicating the state of the robot 100 is obtained.

Furthermore, an emotion table as illustrated in FIG. 12 is prepared also for the emotion of the user 10. FIG. 12 is a diagram illustrating an example of the emotion table. Here, in a case where the action of the user 10 is to say "AAA.", the emotion of the robot 100 corresponds to the index number "2", and the emotion of the user 10 corresponds to the index number "3", the sentences "The robot is in a state of having much fun. The user is having fun. The user said "AAA" to the robot. What will be an answer as a robot?" is to be input to the text generation model and the action content of the robot is acquired. The action determination unit 236 determines an action of the robot 100 from the action content.

In this manner, since the robot 100 is able to change the action of the robot 100 according to the index number corresponding to the emotion of the robot 100, the user 10 has an impression of the robot 100 having a heart, and is prompted to take an action such as talking to the robot 100.

Furthermore, the action determination unit 236 may generate the action content of the robot 100 by adding not only the text indicating the action of the user 10, the emotion of the user 10, and the emotion of the robot but also the text indicating the content of the history data 222, and then adding a fixed sentence for asking a question about the action content of the robot 100 corresponding to the action of the user 10 and inputting the obtained text to the dialogue function. With this configuration, the robot 100 is able to change the action of the robot according to the history data indicating the emotion and the action of the user 10, which gives the user 10 an impression of the robot 100 having individuality, and prompts the user 10 to take an action such as talking to the robot 100. Moreover, the history data may further include the emotion and the action of the robot 100.

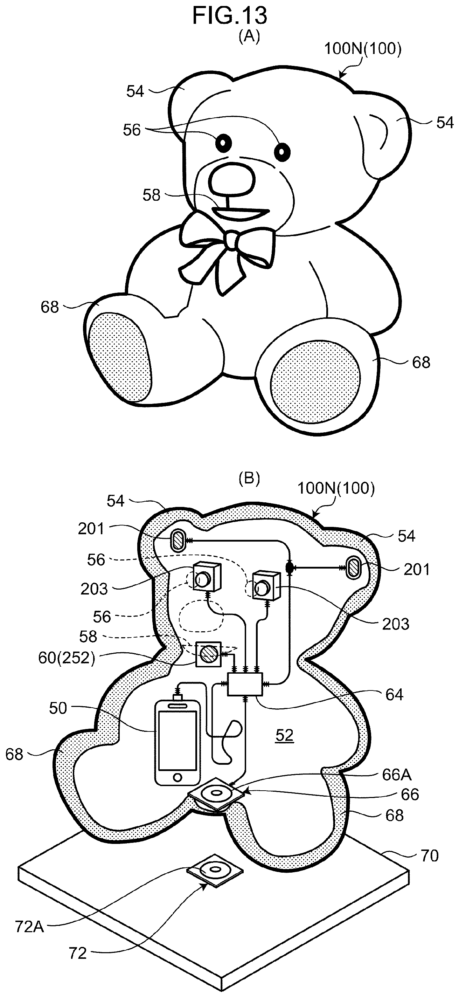

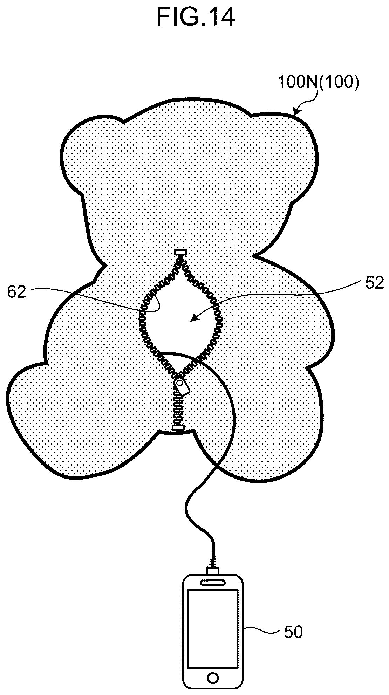

Specifically, the stuffed toy is configured as follows. For example, the robot 100 may be applied to a cohabitant (specifically, a stuffed toy 100N illustrated in FIGS. 13 and 14) who spends daily life with the user 10 and has a dialogue with the user 10 based on information related to daily life, and provides information matching tastes and preferences of the user 10. In the present embodiment (another embodiment), an example in which a control section of the robot 100 is applied to a smartphone 50 will be described.

The stuffed toy 100N is equipped with a function as an input/output device of the robot 100. The smartphone 50 that functions as a control section of the robot 100 is attachable to and detachable from the robot 100. Inside the stuffed toy 100N, an input/output device and the smartphone 50 which is accommodated in the stuffed toy 100N are connected to each other.

As illustrated in FIG. 13(A), the stuffed toy 100N has a shape of a bear, an external appearance of which is covered with a soft fabric in the present embodiment (another embodiment). As illustrated in FIG. 13(B), the input/output devices disposed in a space 52 formed inside the stuffed toy 100N include: the microphone 201 (refer to FIG. 2) of the sensor unit 200 disposed at a portion corresponding to an ear 54; the 2D camera 203 of the sensor unit 200 disposed at a portion corresponding to an eye 56 (refer to FIG. 2); and a speaker 60 constituting a part of the control target 252 (refer to FIG. 2) disposed at a portion corresponding to a mouth 58. Note that the microphone 201 and the speaker 60 are not necessarily separated from each other, and may be an integrated unit. In the case of the unit, it is preferable to dispose the unit at a position where the utterance can be heard naturally, such as the position of a nose of the stuffed toy 100N. Although the case where the stuffed toy 100N has an animal shape has been described as an example, the present invention is not limited thereto. The stuffed toy 100N may have a shape of a specific character.

The smartphone 50 has functions illustrated in FIG. 2, namely, a function as the sensor module unit 210, a function as the storage unit 220, a function as the user state recognition unit 230, a function as the emotion determination unit 232, a function as the action recognition unit 234, a function as the action determination unit 236, a function as the storage control unit 238, a function as the action control unit 250, and functions as the communication processing unit 280 and the support unit 290.

As illustrated in FIG. 14, a fastener 62 is attached to a part (for example, a back portion) of the stuffed toy 100N. By opening the fastener 62, the outside and the space 52 communicate with each other.

Here, the smartphone 50 is accommodated in the space 52 from the outside and is connected in USB connection to each input/output device via a USB hub 64 (refer to FIG. 13(B)), so as to implement a function equivalent to that of the robot 100 illustrated in FIG. 1.

The USB hub 64 is connected to a non-contact power receiving plate 66. The power receiving plate 66 incorporates a power receiving coil 66A. The power receiving plate 66 is an example of a wireless power receiving unit that receives power supply wirelessly.

The power receiving plate 66 is disposed near a root 68 of both legs of the stuffed toy 100N, and is located closest to a mounting base 70 when the stuffed toy 100N is placed on the mounting base 70. The mounting base 70 is an example of an external wireless power transmitter.

The stuffed toy 100N placed on the mounting base 70 can be viewed as a statuette in a natural state.

In addition, this root is formed to be thinner than a surface layer thickness of the stuffed toy 100N in other parts, and thus is held in a state closer to the mounting base 70.

The mounting base 70 includes a charging pad 72. The charging pad 72 incorporates a power transmitting coil 72A. When the power transmitting coil 72A transmits a signal to search for the power receiving coil 66A of the power receiving plate 66, and when the power receiving coil 66A is found, a current flows through the power transmitting coil 72A to generate a magnetic field, and the power receiving coil 66A reacts to the magnetic field to start electromagnetic induction. This allows a current to flow through the power receiving coil 66A, and power is stored in a battery (not illustrated) of the smartphone 50 via the USB hub 64.

That is, the smartphone 50 is automatically charged by placing the stuffed toy 100N as a statuette on the mounting base 70, so that it is not needed to take out the smartphone 50 from the space 52 of the stuffed toy 100N for charging.

In the present embodiment (another embodiment), the smartphone 50 is accommodated in the space 52 of the stuffed toy 100N and connected by wired connection (USB connection), but the connection is not limited thereto. For example, a control device having a wireless function (for example, "Bluetooth (registered trademark)") may be accommodated in the space 52 of the stuffed toy 100N, and the control device may be connected to the USB hub 64. In this case, the smartphone 50 and the control device wirelessly communicate with each other without inserting the smartphone 50 into the space 52, and the external smartphone 50 is connected to each input/output device via the control device, which makes it possible to have a function equivalent to that of the robot 100 illustrated in FIG. 1. Alternatively, the control device accommodated in the space 52 of the stuffed toy 100N and the external smartphone 50 may be connected to each other by wired connection.

While the present embodiment (another embodiment) has exemplified a toy bear as the stuffed toy 100N, the stuffed toy 100N may be another toy, a doll, or may have a shape of a specific character. In addition, their clothes may be changeable. The material of the skin is not limited to a fabric, and may be other materials, such as soft vinyl, but is preferably to be a soft material.

Furthermore, a monitor may be attached to the skin of the stuffed toy 100N to add the control target 252 that provides information to the user 10 through vision. For example, the eye 56 may be used as a monitor to express delight, anger, sadness, and joy by an image projected on the eye 56, or there may be provided, at a belly, a window through which the monitor of the built-in smartphone 50 is visible. Moreover, the eyes 56 may be used as a projector to express delight, anger, sadness, and joy by an image projected on a wall surface.

According to another embodiment, the existing smartphone 50 is placed in the stuffed toy 100N, and the camera 203, the microphone 201, the speaker 60, and the like are extended from the smartphone 50 to appropriate positions via the USB connection.

Furthermore, for wireless charging, the smartphone 50 and the power receiving plate 66 are connected via a USB, and the power receiving plate 66 is disposed so as to be as outermost as possible from the inside of the stuffed toy 100N.

In order to use wireless charging of the smartphone 50, it is needed to dispose the smartphone 50 as outermost as possible when viewed from the inside of the stuffed toy 100N, which would give a rough feeling when the stuffed toy 100N is touched from the outside.

To avoid this, the smartphone 50 is disposed at the center of the stuffed toy 100N as much as possible, while the wireless charging function (the power receiving plate 66) is disposed as outermost as possible as viewed from the inside of the stuffed toy 100N. The camera 203, the microphone 201, the speaker 60, and the smartphone 50 receive wireless power supply via the power receiving plate 66.

### Second embodiment

Explanation will be given below mainly focusing on differences from the first embodiment, and explanation of the same configurations and processes as those of the first embodiment will be omitted.

Each of the robots 100 according to the second embodiment has a language support function to detect an acquisition status of the user 10 with respect to a language and output information in accordance with the detected acquisition status. For example, the robot 100 detects a level of understanding of a native language and a foreign language (English or the like) and outputs information on a language instruction, a language skill, and vocabulary corresponding to the level of understanding, so that it is possible to output appropriate information to the user 10 in accordance with the language acquisition status of the user 10.

The support unit 290 according to the second embodiment implements the language support function as described above. The support unit 290 causes the robot 100 to output information corresponding to the detected acquisition status.

The detection unit 2901 of the support unit 290 detects the acquisition status of the user 10 with respect to various kinds of languages. Further, the output control unit 2902 causes the robot 100 including the text generation model to output information corresponding to the acquisition status detected by the detection unit 2901 to the user 10.

For example, the detection unit 2901 detects an acquisition status of the user 10 with respect to a language other than the native language (for example, English for Japanese). Further, the detection unit 2901 detects an acquisition status for each skill for the language. Examples of the skills include reading, writing, listening, and speaking.

Furthermore, the output control unit 2902 causes the robot 100 to output information corresponding to the detected acquisition status. For example, the output control unit 2902 outputs a learning curriculum corresponding to the acquisition status and a target level of the user 10. Moreover, the output control unit 2902 may output a learning curriculum for each skill. With this configuration, it is possible to realize an effective language learning with the curriculum corresponding to the acquisition status and the target level of each of the users 10.

Moreover, the detection unit 2901 detects an acquisition status of the user 10 with respect to the native language. Furthermore, the output control unit 2902 causes the robot 100 to output information corresponding to the detected acquisition status of the native language. For example, the detection unit 2901 detects, as the acquisition status, a language development status of infants (1 to 3 years old or pre-kindergarten children). Moreover, the output control unit 2902 outputs information on a communication method between a parent and a child in accordance with the language development status. The communication method, for example, a method related to songs, picture books, conversations, or the like. With this configuration, it is possible to support normal language development of infants.

Furthermore, the detection unit 2901 detects an acquisition status of an infant or a kindergartener with respect to a foreign language. Moreover, the detection unit 2901 detects intention of parents (aiming for native level or the like) with respect to learning objectives of the foreign language for the infant or the kindergartener. Furthermore, the output control unit 2902 outputs a learning curriculum for each development stage (for example, age) corresponding to the acquisition status and the intention of the parents. With this configuration, it is possible to provide an optimal program in accordance with the development stage of a child and make progress in learning while keeping the child motivated.

Moreover, the detection unit 2901 detects an acquisition status of the user 10 (that is, an adult, such as a working adult) who has finished learning of a foreign language. Furthermore, the detection unit 2901 detects a purpose of use of the foreign language (for business purpose or the like). Moreover, the output control unit 2902 outputs a learning curriculum for communication skills using the foreign language, information on cross-cultural understanding, or learning of the foreign language in accordance with the acquisition status and the purpose of use.

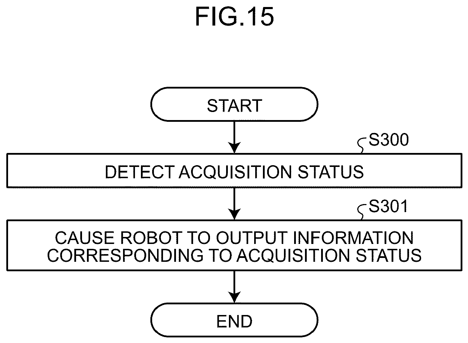

FIG. 15 is a diagram schematically illustrating an operation flow performed by the support unit 290. First, the support unit 290 detects a language acquisition status of the user 10 (Step S300). Then, the support unit 290 causes the robot 100 including the text generation model to output information corresponding to the detected acquisition status to the user 10 (Step S301), and the processing is terminated.

### Third embodiment

Explanation will be given below mainly focusing on differences from the above-described embodiments, and explanation of the same configurations and processes as those of the above-described embodiments will be omitted.

Each of robots according to a third embodiment has an output function to evaluate a state of the user 10 and output proposal information on a proposal for the state of the user 10 to a predetermined output destination. For example, each of the robots is able to make a proposal in accordance with the evaluation on the state of the user 10, so that it is possible to improve the state of the user 10.

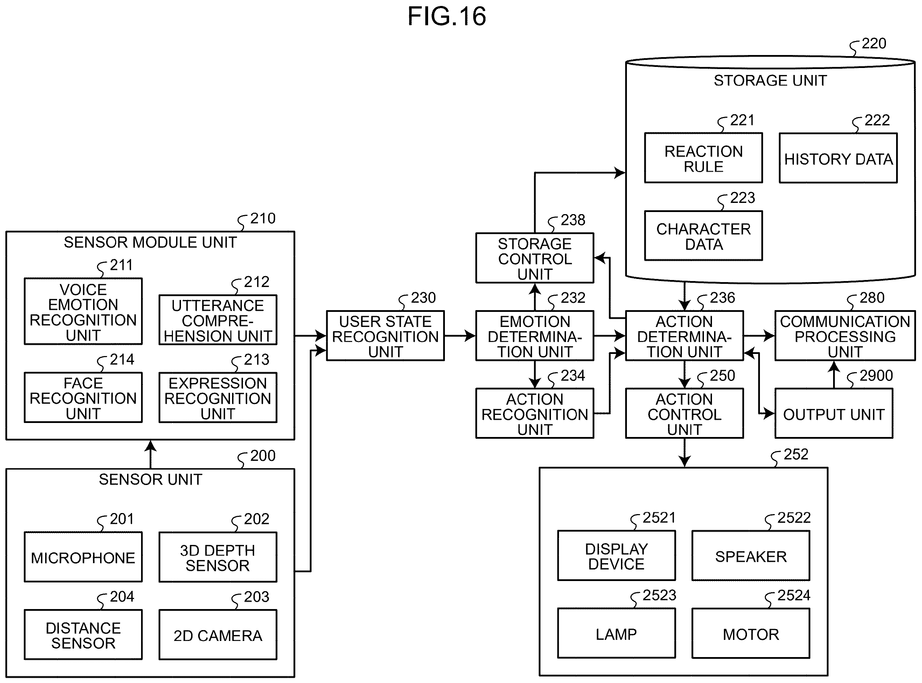

FIG. 16 is a diagram schematically illustrating a functional configuration of the robot 100. The robot 100 includes the sensor unit 200, the sensor module unit 210, the storage unit 220, the user state recognition unit 230, the emotion determination unit 232, the action recognition unit 234, the action determination unit 236, the storage control unit 238, the action control unit 250, the control target 252, the communication processing unit 280, and an output unit 2900. The output unit 2900 implements the output function as described above.

The output unit 2900 will be described in detail below. The output unit 2900 is included in the robot 100 and causes the robot 100 to output information.

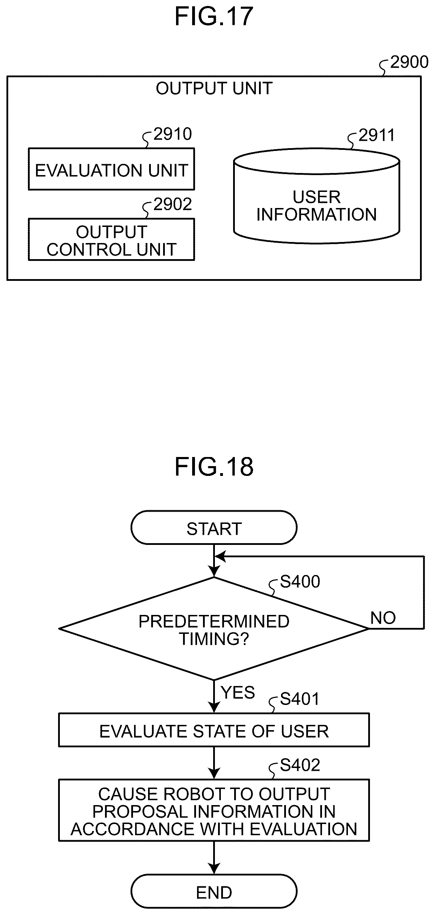

As illustrated in FIG. 17, the output unit 2900 includes an evaluation unit 2910 and the output control unit 2902. Further, the output unit 2900 stores therein user information 2911.

Each of components of the output unit 2900 is implemented by causing a CPU to operate based on a program. For example, functions of the components may be implemented as the operation of the CPU by basic software (OS) and a program that operates on the OS. The user information 2911 is implemented by a storage medium, such as a memory.

For example, the evaluation unit 2910 evaluates the state of the user 10 based on user information on the user 10 accumulated in the user information 2911. Furthermore, the output control unit 2902 causes the robot 100 including the text generation model to output proposal information on a proposal for the state of the user 10 to a predetermined output destination in accordance with the evaluation made by the evaluation unit. As a specific example, the evaluation unit 2910 makes an evaluation on utterance of the user 10 based on user information on the utterance of the user 10. Then, the output control unit 2902 causes the robot 100 to output, to the user 10, proposal information on a proposal for the utterance of the user 10 in accordance with the evaluation. As a more specific example, when the user 10 is practicing presentation, the evaluation unit 2910 analyzes a content of the presentation based on user information on the content of the presentation, word choice, expressions of the user 10, gestures, a tone of voice, or the like, and evaluates the presentation (for example, evaluation on emotions and reactions of general public and audience). Moreover, the output control unit 2902 outputs information on improvement points of the presentation as a live demonstration (for example, appropriate contents, words, expressions, gestures, and a tone of voice are output) on behalf of the general public and audience. With this configuration, the user 10 is able to know reactions of the general public and audience in advance, and therefore is able to prevent a risk of reputation damage. Furthermore, the user 10 is able to know how to modify the presentation to improve the reputation.

Moreover, for example, the evaluation unit 2910 evaluates the state of the user in a predetermined organization based on user information indicating a context of the user 10 who belongs to the predetermined organization. Furthermore, the output control unit 2902 causes the robot 100 to output, to the user 10, proposal information on a proposal for the state of the user 10 in the organization in accordance with the evaluation. As a specific example, the evaluation unit 2910 evaluates the state, such as motivation or stress, of each of the users 10 in the organization based on the background, emotions, or needs of each of the users 10 who belong to the organization, such as a company, a volunteer organization, or a non-profit organization. Moreover, the output control unit 2902 causes the robot 100 to output, to each of the users 10, information on improvement in communication in the organization, information on a strategic approach to achieve a goal of the organization, an educational program, support for maintaining motivation, information for relieving stress, or the like in accordance with the evaluation. With this configuration, the robot 100 is able to cope with emotions and needs of the members (the users 10) who have diverse backgrounds in the organization, promote diversity and inclusion in the organization, and support promotion of understanding and cooperation among the members.

Furthermore, for example, the evaluation unit 2910 evaluates the state of the user 10 in a predetermined work based on user information indicating a context of the user 10 who performs the predetermined work. Moreover, the output control unit 2902 causes the robot 100 to output, to the user 10, proposal information on a proposal for the state of the user 10 in the work in accordance with the evaluation. As a specific example, the evaluation unit 2910 evaluates the state, such as motivation or stress, of the user 10 in the work based on the background, emotions, needs, or stress of the user 10 who is an employee of the company (for example, the user 10 who works remotely). Furthermore, the output control unit 2902 causes the robot 100 to output information on an advice on management of emotions and stress and information on proposals for an efficient way to work, a way to take proper breaks, and a way to achieve work-life balance, in accordance with the evaluation. With this configuration, the robot 100 is able to support work style reform of the user 10 in a remote work and reduce a mental burden.

Moreover, for example, the evaluation unit 2910 evaluates the state of the user 10 in relation to a job change based on the user information indicating the context of the user 10. Furthermore, the output control unit 2902 causes the robot 100 to output, to the user 10, proposal information on a proposal for the state of the user 10 in relation to the job change in accordance with the evaluation. As a specific example, the evaluation unit 2910 evaluates the state, such as motivation or stress, of the user 10 based on the background, emotions, needs, or stress of the user 10 who is considering a career change. Moreover, the output control unit 2902 causes the robot 100 to output information on emotional support, such as motivation maintenance or stress relief, in accordance with the evaluation. Furthermore, the output control unit 2902 causes the robot 100 to output information on proposals for a method of promoting self-understanding, a method of improving skills for a smooth transition to new career, or a networking method. With this configuration, the robot 100 is able to support the user 10 to choose an appropriate career.

Moreover, for example, the evaluation unit 2910 evaluates the state of the user 10 in relation to career advancement based on the user information indicating the context of the user 10. Furthermore, the output control unit 2902 causes the robot 100 to output, to the user 10, proposal information on a proposal for the state of the user 10 in relation to the career advancement in accordance with the evaluation. As a specific example, the evaluation unit 2910 evaluates the state, such as motivation or stress, of the user 10 based on the background, emotions, needs, or stress of the user 10 who is to advance his/her career. Moreover, the output control unit 2902 causes the robot 100 to output information on a personalized guidance based on emotional needs or ambitions of the user 10, information on setting of goals to be achieved, information on progress management, and information on a proposal for a method of acquiring appropriate skills in accordance with the evaluation. With this configuration, the robot 100 is able to provide a personalized guidance based on the emotional needs and ambitions to an individual who is to advance his/her career.

Furthermore, for example, the evaluation unit 2910 makes an evaluation on a transaction target based on user information indicating an evaluation made by the user 10 who is provided with the transaction target (for example, a product or a service). Moreover, the output control unit 2902 causes the robot 100 to output, to a provider who provides the transaction target, proposal information on a proposal for the transaction target in accordance with the evaluation. As a specific example, the evaluation unit 2910 makes an evaluation on emotions and demands of the user 10 with respect to the transaction target based on a review, feedback, or the like of the user 10 with respect to the transaction target. Furthermore, the output control unit 2902 causes the robot 100 to output, to the provider, information on improvement points of the transaction target in accordance with the evaluation. With this configuration, the robot 100 is able to contribute to improvement in customer satisfaction.

Moreover, for example, the evaluation unit 2910 makes an evaluation on a manger who manages the user 10 based on emotions of the user 10 based on the user information. Furthermore, the output control unit 2902 causes the robot 100 to output, to the manager, proposal information on a proposal for management of the user 10 in accordance with the evaluation. As a specific example, the evaluation unit 2910 evaluates the state, such as motivation, stress, or emotions, of the user 10 based on the background, emotions, needs, or stress of the user 10. Moreover, the output control unit 2902 causes the robot 100 to output, to the manager, information on a response and an advice for the user 10 in accordance with the evaluation. With this configuration, the robot 100 is able to support leadership and decision making of the manager by outputting an appropriate response and advice in accordance with emotions or the like of a subordinate (the user 10) of the manager. Furthermore, the robot 100 is able to output, to the manager, information on emotional coaching and support self-management.

Meanwhile, the user information may be voice, expressions, motions, or the like of the user 10 detected by various kinds of sensors included in the robot 100 or may indicate circumstances of the user 10. Furthermore, the user information may be information acquired from an external server.

FIG. 18 is a diagram schematically illustrating an example of an operation flow performed by the output unit 2900. At Step S400, the output unit 2900 determines whether it is a predetermined timing to evaluate the state of the user 10 (Step S400). When it is not the predetermined timing (Step S400; No), the output unit 2900 waits until the predetermined timing.

In contrast, when it is the predetermined timing (Step S400; Yes), the output unit 2900 evaluates the state of the user 10 based on the user information on the user 10 (Step S401). Subsequently, the output unit 2900 causes the robot 100 to output, to a predetermined output destination, proposal information on a proposal for the state of the user 10 in accordance with the evaluation (Step S402), and the processing is terminated.

### Fourth embodiment

Explanation will be given below mainly focusing on differences from the above-described embodiments, and explanation of the same configurations and processes as those of the above-described embodiments will be omitted.

Each of robots according to a fourth embodiment has an output function to recognize an emotion of the user 10 and output information on insurance in which the user 10 is to enroll, in accordance with the emotion of the user 10. For example, each of the robots is able to output information corresponding to the emotion of the user 10, so that it is possible to support enrollment in the insurance while resonating with the emotion of the user 10.

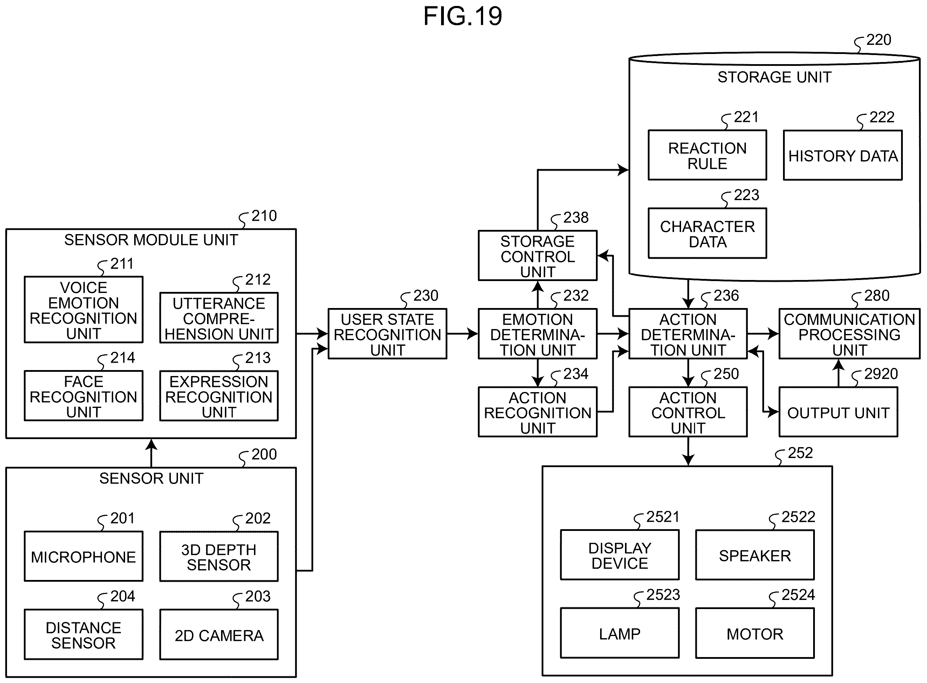

FIG. 19 is a diagram schematically illustrating a functional configuration of the robot 100. The robot 100 includes the sensor unit 200, the sensor module unit 210, the storage unit 220, the user state recognition unit 230, the emotion determination unit 232, the action recognition unit 234, the action determination unit 236, the storage control unit 238, the action control unit 250, the control target 252, the communication processing unit 280, and an output unit 2920. The output unit 2900 implements the output function as described above. The output unit 2920 is included in the robot 100 and causes the robot 100 to output information.

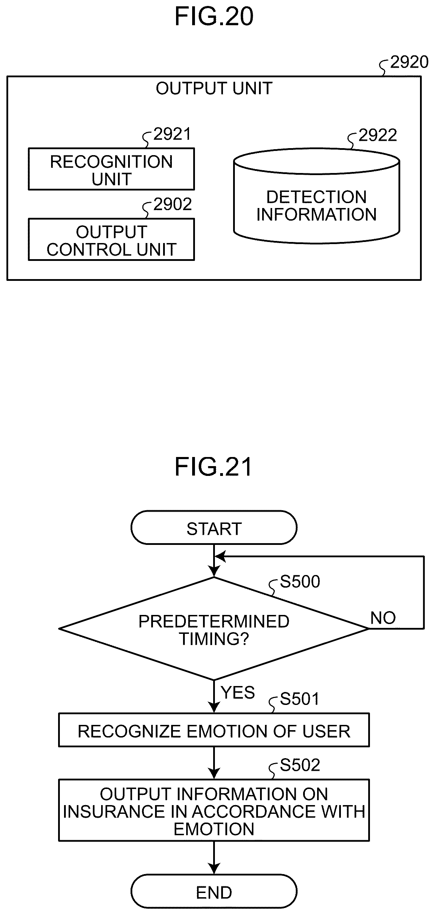

As illustrated in FIG. 20, the output unit 2920 includes a recognition unit 2921 and the output control unit 2902. Further, the output unit 2920 stores therein detection information 2922.

Each of components of the output unit 2900 is implemented by causing a CPU to operate based on a program. For example, functions of the components may be implemented as the operation of the CPU by basic software (OS) and a program that operates on the OS. The detection information 2922 is implemented by a storage medium, such as a memory.

For example, the recognition unit 2921 recognizes the emotion of the user 10 based on the detection information detected from the user 10 (for example, the detection information accumulated in the detection information 2922). Further, the output control unit 2902 causes the robot 100 including the text generation model to output, to the user 10, information on the insurance in which the user 10 is to enroll in accordance with the emotion recognized by the recognition unit 2921. As a specific example, the output control unit 2902 causes the robot 100 to output information for assisting generation of a document used for enrollment in the insurance. As a more specific example, the output control unit 2902 causes the robot 100 to output information on support for creation and filling in an insurance contract or an application form in accordance with the emotion of the user 10. With this configuration, the robot 100 is able to reduce cumbersomeness of procedures related to the insurance contract while resonating with the emotion of the user 10.

Furthermore, for example, the output control unit 2902 causes the robot 100 to output information on the insurance for which enrollment is proposed to the user 10. As a specific example, the output control unit 2902 causes the robot 100 to output information on a consulting support at the time of enrollment in the insurance, in accordance with the emotion of the user 10. With this configuration, the robot 100 is able to clearly explain types and details of insurance and make a proposal for insurance that meets needs of the user 10 while resonating with the emotion of the user 10, so that it is possible to improve reliance from the user 10.

Moreover, for example, the output control unit 2902 causes the robot 100 to output a question from the user 10 about the insurance or a response to consultation. As a specific example, the output control unit 2902 gives an answer to the question or consultation about the insurance in accordance with the emotion of the user 10. With this configuration, the robot 100 is able to provide support as a consultation counter related to insurance while resonating with the emotion of the user 10, so that it is possible to improve reliance from the user 10.

Meanwhile, the detection information may be voice, expressions, motions, or the like of the user 10 detected by various kinds of sensors included in the robot 100 or may indicate circumstances of the user 10.

FIG. 21 is a diagram schematically illustrating an example of an operation flow performed by the output unit 2920. At Step S500, the output unit 2920 determines whether it is a predetermined timing to output information to the user 10 (for example, a timing to detect a query or consultation from the user 10) (Step S500). When it is not the predetermined timing (Step S500; No), the output unit 2920 waits until the predetermined timing.

In contrast, when it is the predetermined timing (Step S500; Yes), the output unit 2920 recognizes the emotion of the user 10 based on the detection information detected from the user 10 (Step S501). Subsequently, the output unit 2920 causes the robot 100 to output, to the user 10, information on insurance in which the user 10 is to enroll in accordance with the emotion of the user 10 (Step S502), and the processing is terminated.

### Fifth embodiment

Explanation will be given below mainly focusing on differences from the above-described embodiments, and explanation of the same configurations and processes as those of the above-described embodiments will be omitted.

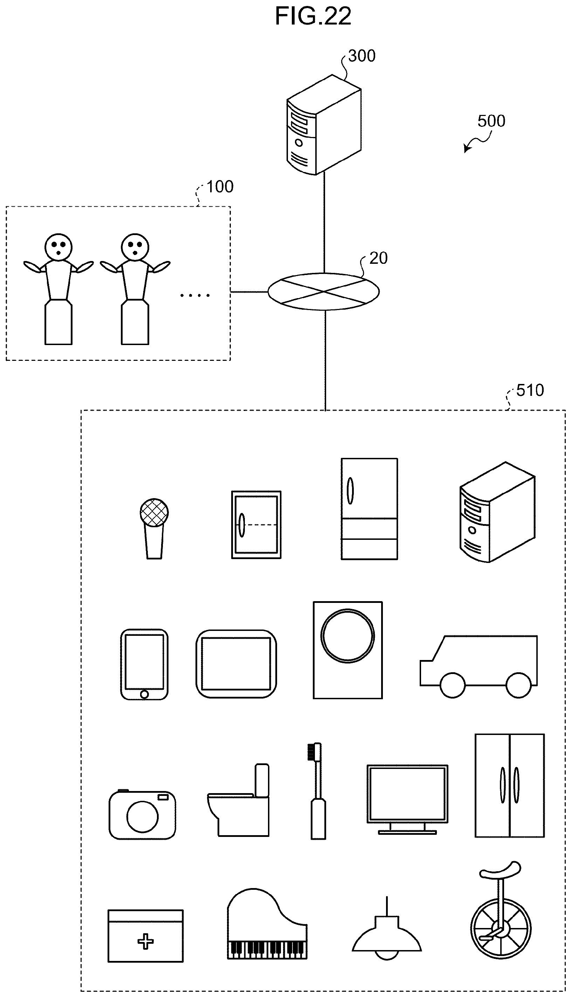

FIG. 22 is a diagram schematically illustrating an example of a control system 500 according to a fifth embodiment. As illustrated in FIG. 1, the control system 500 includes the plurality of robots 100, a cooperative device 510, and the server 300. Each of the robots 100 is managed by the user 10.

In addition, the robot 100 is able to execute an action in cooperation with the cooperative device 510. The cooperative device 510 is, for example, karaoke equipment, a wine cellar, a refrigerator, a terminal device (Personal Computer (PC), smartphone, tablet, etc.), a washing machine, an automobile, a camera, a toilet facility, an electric toothbrush, a television, a display, furniture (a closet or the like), a medicine box, a music instrument, a lighting device, or an exercise toy (a unicycle or the like). The cooperative devices 510 are communicably connected to the robot 100 via the communication network 20, and transmit and receive information to and from the robot 100. With this configuration, the cooperative device 510 performs its own control, a conversation with the user 10, and the like in accordance with an instruction from the robot 100.

In the present disclosure, an example will be described in which various kinds of actions are executed for the user 10 by recognizing an action of the user 10 who performs a task related to programming, determining own action in accordance with the recognized action of the user 10, and controlling a control target based on the determined own action.

Specifically, the robot 100 recognizes the emotion of the user 10 who is performing a task related to programming and changes its own emotion to execute an action of providing mental support to the user 10. Furthermore, the robot 100 gives an advice for improving efficiency of the task and executes an action of supporting the task with respect to the operation that is performed by the user 10.

For example, with respect to the user 10 who is learning programming, when a time in which a screen of a learning device is not watched increases or when it takes a certain time or more to perform input to the learning device, the robot 100 recognizes that the emotion of the user 10 is "painful" or "distressed" and offers words such as "How about taking a short break?" to the user 10 to alleviate negative emotions of the user 10. Furthermore, for example, the robot 100 makes a proposal for an efficient learning method in accordance with a learning level of the user 10 with respect to the programming learning of the user 10 and manage a learning progress and a learning plan to improve efficiency of the learning and maintain motivation of the user 10.

Furthermore, for example, when the user 10 who is a member of a software development team is not making good progress in the task for which the user 10 is responsible, the robot 100 recognizes that the emotion of the user 10 has turned to "anxious" and offers words such as "How about consulting with team members?" to the user 10 to provide mental support to the user 10. Moreover, for example, the robot 100 manages progress in the task of each of the team members to promote a teamwork of the software development team and makes a proposal to a member who is making good progress to support a member who is not making good progress. Furthermore, for example, the robot 100 manages an entire software development project and makes a proposal for a code review method of each task to contribute to improvement in efficiency of development processes.

Moreover, for example, when the user 10 who is participating in hackathon is not able to communicate well with a new team member, the robot 100 recognizes that the emotion of the user 10 has turned to "anxious" and offers words such as "Let's talk calmly. It will be alright." to the user 10 to alleviate anxiety of the user 10. Furthermore, the robot 100 presents idea generation methods of past participants to a hackathon team to promote generation of ideas or presents an estimated deadline of each task to manage project progress. Moreover, for example, the robot 100 actually shows an example of presentation to team members of the hackathon in cooperation with a display that is the cooperative device 510 to support improvement in presentation skills.

Furthermore, for example, the robot 100 recognizes that, with respect to the user 10 who is a programmer, the emotion of the user 10 has turned to "distressed" or "anxious" due to operation for dealing with debug or errors and offers words such as "Let's make progress on the task to ∘∘ today." to the user 10 to clarify a goal of the task and maintain motivation of the user 10. Moreover, for example, the robot 100 makes a proposal for an efficient debug method and an appropriate approach for errors with respect to the task of the user 10 to present a solution to a problem that has occurred during the task and contribute to reduction of stress that arises from the task of the user 10.

Furthermore, for example, the robot 100 recognizes that, with respect to the user 10 who is working on a project related to artificial intelligence and machine learning, the emotion of the user 10 has turned to "distressed" or "anxious" due to a delay of data processing task of a machine model from schedule and offers words such as "How about trying to ∘∘ method?" to the user 10 to break stagnation of the task and provide mental support to the user 10. Moreover, for example, the robot 100 makes a proposal for selection of an efficient algorithm, preparation for a data set, and an appropriate machine model evaluation method with respect to the task of the user 10 to improve efficiency of work content of the project.

Furthermore, for example, the robot 100 recognizes that, with respect to the user 10 who is a game developer, the emotion of the user 10 has turned to "distressed", "anxious", or "painful" due to occurrence of a new task, such as bug handling, and offers words such as "How about check task schedule?" to the user 10 to check progress of each task of game development and reconfirm the goal to alleviate anxious feeling of the user 10 with respect to the task. Moreover, for example, the robot 100 makes a proposal for improvement in efficiency of a development process, bug handling, and improvement in game designs with respect to the task of the user 10 to contribute to success in game development.

Furthermore, for example, the robot 100 recognizes that, with respect to the user 10 who is a web designer, the emotion of the user 10 has turned to "distressed" or "anxious" due to worrying about improvement in user experiences and offers words such as "How about a change of pace?" to the user 10 to provide mental support to the user 10. Moreover, for example, the robot 100 makes a proposal for improvement in efficiency of coding or design ideas for a web site with respect to the task of the user 10 to improve performance of the web site designed by the user 10.

Furthermore, for example, the robot 100 recognizes that, with respect to the user 10 who is an expert or an engineer for IT security measures, the emotion of the user 10 has turned to "distressed", "anxious", or "painful" due to worrying about an appropriate implementation means for the security measures and offers words such as "How about getting some fresh air?" to the user 10 to provide mental support to the user 10. Moreover, for example, the robot 100 gives an advice about project management, vulnerability management, improvement in incident management, or the like with respect to the task of the user 10 to enhance security.

In this manner, in the present disclosure, the robot 100 recognizes negative emotions, such as "anxious", "distressed", and "painful", of the user 10 and changes its own emotions with respect to the user 10 who performs tasks related to programming, so that it is possible to provide mental support. Furthermore, for example, the robot 100 is able to acquire information on the task content of the user 10 and give an advice for information on improvement in efficiency of the task content by cooperating with the device by which the user 10 performs tasks. In other words, according to the robot 100 of the present disclosure, it is possible to execute an appropriate action for the user 10.

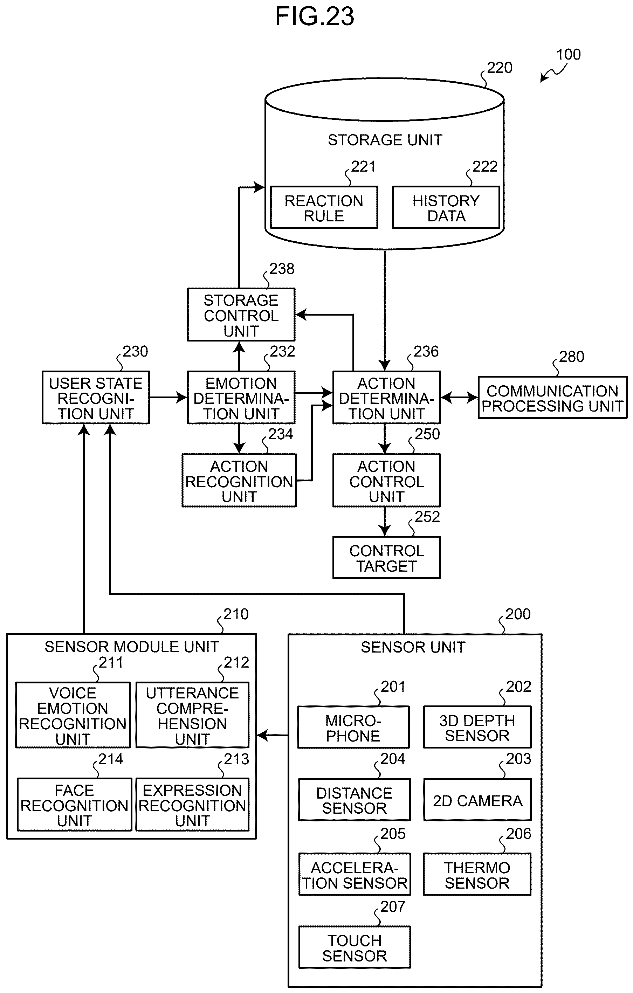

FIG. 23 is a diagram schematically illustrating a functional configuration of the robot 100. The robot 100 is constituted of a control unit that includes the sensor unit 200, the sensor module unit 210, the storage unit 220, the user state recognition unit 230, the emotion determination unit 232, the action recognition unit 234, the action determination unit 236, the storage control unit 238, the action control unit 250, the control target 252, and the communication processing unit 280.

The sensor unit 200 further includes the acceleration sensor 205, a thermo sensor 206, and the touch sensor 207. The acceleration sensor 205 is, for example, a gyro sensor and detects acceleration of the robot 100. The thermo sensor 206 detects temperature around the robot 100. The touch sensor 207 is a sensor that detects touch operation performed by the user 10 and is provided on, for example, the head and hands of the robot 100.

The storage unit 220 includes the reaction rule 221 and the history data 222.

For example, the utterance comprehension unit 212 of the sensor module unit 210 analyzes "sigh" of the user 10 who is performing a task or analyzes an instruction such as "Can you give me some tips for presentation" from the user 10. For example, the expression recognition unit 213 of the sensor module unit 210 recognizes expressions of the user 10 who is performing a task and feeling stressed.

For example, the user state recognition unit 230 generates perception information such as "Operation on the user terminal has not been performed for a predetermined time." or "User is not concentrated on the task with probability of 90%.", and performs processing of understanding a meaning of the generated perception information. For example, the user state recognition unit 230 generates semantic information such as "User has not been performing operation on a task device for 5 minutes or more and is highly likely not to be concentrated on the task."

For example, the action recognition unit 234 recognizes actions of the user 10 such as "input operation on the task device", "putting hands on head", "wandering around" in programming operation.

For example, the reaction rule 221 defines the action of the robot 100 corresponding to action patterns in a case where the user 10 is taking an action other than the task, in a case where the user 10 sighs, or in a case where utterance is to be made in relation to requests from the user 10 ("Tell me about task progress" or "Tell me about an efficient way for ∘∘").

For example, when the user 10 is not concentrated on the task, the action control unit 250 performs an utterance such as "How about doing some exercise?" or "How about taking a short break?". Furthermore, when the user 10 is making good task progress, the action control unit 250 performs an utterance such as "Good job! You finished the task on schedule!" or "Let's finish today's task here". Moreover, when the task of the user 10 is stagnating, the action control unit 250 acquires information on a content of the stagnated task in cooperation with the task device and displays information on an efficient task method on the task device. Moreover, the action control unit 250 takes an action in cooperation with the cooperative device 510 in accordance with a conversation content such as "Tell me about task progress", "Can you give me some tips for presentation", or "Tell me about an efficient way for ∘∘" from the user 10.

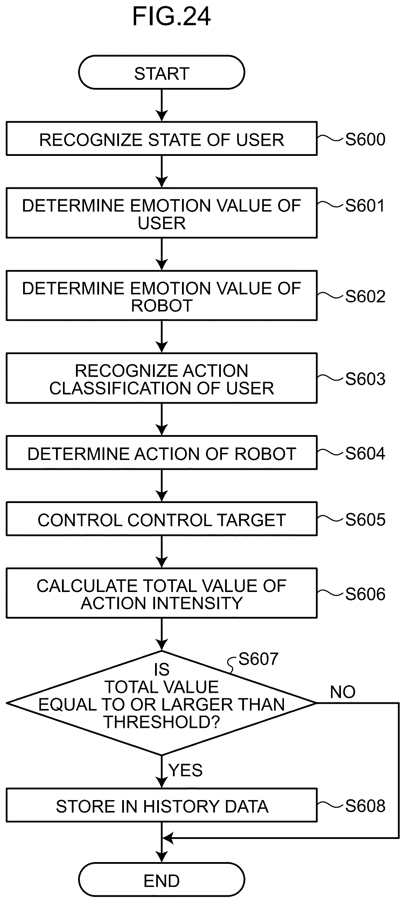

FIG. 24 is a diagram schematically illustrating an example of an operation flow related to an operation of determining an action of the robot 100. The operation flow illustrated in FIG. 24 is repeatedly executed. At this time, it is assumed that information analyzed by the sensor module unit 210 is input. Note that "S" in the operation flow represents a step to be executed.

First, at Step S600, the user state recognition unit 230 recognizes the state of the user 10 based on the information analyzed by the sensor module unit 210. For example, the user state recognition unit 230 generates perception information such as "Operation on the user terminal has not been performed for a predetermined time." or "User is not concentrated on the task with probability of 90%.", and performs processing of understanding a meaning of the generated perception information. For example, the user state recognition unit 230 generates semantic information such as "User has not been performing operation on a task device for 5 minutes or more and is highly likely not to be concentrated on the task."

At Step S601, the emotion determination unit 232 determines an emotion value indicating the emotion of the user 10 based on the information analyzed by the sensor module unit 210 and the state of the user 10 recognized by the user state recognition unit 230.

At Step S602, the emotion determination unit 232 determines an emotion value indicating the emotion of the robot 100 based on the information analyzed by the sensor module unit 210 and the state of the user 10 recognized by the user state recognition unit 230. The emotion determination unit 232 adds the determined emotion value of the user 10 to the history data 222.

At Step S603, the action recognition unit 234 recognizes an action classification of the user 10 based on the information analyzed by the sensor module unit 210 and the state of the user 10 recognized by the user state recognition unit 230. For example, the action recognition unit 234 recognizes the action of the user 10 such as "input operation on the task device", "putting hands on head", "wandering around" in programming operation.

At Step S604, the action determination unit 236 determines the action of the robot 100 based on the combination of the current emotion value of the user 10 determined at Step S601 and the past emotion value included in the history data 222, the emotion value of the robot 100, the action of the user 10 recognized by the action recognition unit 234, and the reaction rule 221.

At Step S605, the action control unit 250 controls the control target 252 based on the action determined by the action determination unit 236. For example, the action control unit 250 performs an utterance to encourage the user 10 to take a break or causes the task device to display information for improving task efficiency with respect to the task of the user 10.

At Step S606, the storage control unit 238 calculates a total value of the intensity based on action intensity that is determined in advance with respect to the action determined by the action determination unit 236 and the emotion value of the robot 100 determined by the emotion determination unit 232.

At Step S607, the storage control unit 238 determines whether the total value of the intensity is equal to or larger than a threshold. In a case where the total value of the intensity is smaller than the threshold, the data including the action of the user 10 is not stored in the history data 222, and the processing is terminated. In contrast, when the total value of the intensity is equal to or larger than the threshold, the processing proceeds to Step S608.

At Step S608, the action determined by the action determination unit 236, the information analyzed by the sensor module unit 210 from the current time point to a certain period before, and the state of the user 10 recognized by the user state recognition unit 230 are to be stored in the history data 222.

As described above, the robot 100 includes the control unit that recognizes the action of the user 10 who performs a task related to programming, determines its own action corresponding to the recognized action of the user 10, and controls the control target based on the determined own action. With this configuration, the robot 100 is able to take an appropriate action of providing information for efficiently performing the task to the user 10 who performs the task related to programming, for example.

Furthermore, the control unit of the robot 100 determines an action of providing mental support to the user 10 and an action of giving an advice related to the learning method. With this configuration, the robot 100 is able to maintain motivation of a programming learner.

Moreover, the control unit of the robot 100 determines, with respect to the user 10 who is a member of a software development team, the action of providing mental support to the user 10, the action of providing support related to improvement in teamwork of the software development team, and the action of giving an advice related to a development process in software development. With this configuration, the robot 100 is able to improve the teamwork of the software development team, maintain motivation of the team members, and give an advice for improvement in the development process, so that it is possible to contribute to success in the project.

Furthermore, the control unit of the robot 100 determines the action of providing mental support to the user 10 and the action of giving an advice for progress of the project and an advice for improvement in presentation skills with respect to the user 10 who is participating in hackathon. With this configuration, the robot 100 provides emotional support to the participant in the hackathon and technical support about progress of the project or the presentation method, so that it is possible to support the participants in the hackathon.

Moreover, the control unit of the robot 100 determines the action of providing mental support to the user 10 and the action of presenting a solution to a problem that has occurred during the work with respect to the user 10 who is a programmer. With this configuration, the robot 100 is able to provide support for stability of a mental state of the programmer and appropriately copes with a problem that has occurred during the work.

Furthermore, the control unit of the robot 100 determines the action of providing mental support to the user 10 and the action of giving an advice related to improvement in efficiency of the task content of the project with respect to the user 10 who is working on the project related to artificial intelligence and machine learning. With this configuration, the robot 100 is able to provide emotional support and present choices of algorithms with high task efficiency to the programmer who is working on the project related to artificial intelligence and machine learning, so that it is possible to contribute to success in the project.

Moreover, the control unit of the robot 100 determines the action of providing mental support to the user 10 and the action of giving an advice related to improvement in efficiency of a development process and an advice related to a game design with respect to the user 10 who is a game developer. With this configuration, the robot 100 provides mental support and provide technical support about the game design or debug handling to the programmer as the game developer, so that it is possible to contribute to success in the game development.

Furthermore, the control unit of the robot 100 determines the action of providing mental support to the user 10 and the action of giving an advice related to improvement in performance of a web site with respect to the user 10 who is a web designer. With this configuration, the robot 100 provides mental support to the programmer as the web designer and gives an advice for improvement in the web design and user experience, so that it is possible to contribute to development of the web site with high performance.

Moreover, the control unit of the robot 100 determines the action of providing mental support to the user 10 and the action related to improvement in security with respect to the user 10 who performs a task related to the security for information technology. With this configuration, the robot 100 provides mental support to the programmer in relation to the IT security and provides information on appropriate implementation of security measures, so that it is possible to allow an expertise of the IT security or the like to perform an appropriate task.

While the above embodiments are cases where the robot 100 recognizes the user 10 using the face image of the user 10, the disclosed technology is not limited to this aspect. For example, the robot 100 may recognize the user 10 using a voice uttered by the user 10, a mail address of the user 10, an ID of an SNS of the user 10, an ID card incorporating a wireless IC tag possessed by the user 10, or the like.

### Sixth embodiment

Explanation will be given below mainly focusing on differences from the above-described embodiments, and explanation of the same configurations and processes as those of the above-described embodiments will be omitted.

The present disclosure will describe an example in which the robot 100 analyzes the emotion of the user 10 and the emotion of the different user 10, determines its own action corresponding to the emotion of the user 10 and the emotion of the different user 10, and controls the control target based on the determined own action.

For example, the robot 100 analyzes that the emotion of the user 10 is "angry" and the emotion of the different user 10 is "confused", and gives an advice to the different user 10 about information that is estimated as a cause of the emotion "angry" of the user 10 and handling (for example, the way to resolve misunderstandings or the way to express an apology) in accordance with the emotion "confused" of the different user 10 to ease the analyzed emotion "angry" of the user 10.

Furthermore, the robot 100 determines an action of improving interpersonal skills of the different user 10 based on the emotion of the user 10 and the emotion of the different user 10. For example, when the emotion of the user 10 is "delighted" and the emotion of the different user 10 is "bored", the robot 100 gives an advice to the different user 10 about words and actions for resonating with the emotion "delighted" of the user 10 to learn appropriate handling. For example, the robot 100 gives an advice to the different user 10 about a gesture or a body language for resonating with the emotion "delighted" of the user 10.

Moreover, the robot 100 determines an action of teaching the different user 10 about a behavior to improve the emotion of the user 10. For example, when the emotion of the user 10 is "sad", the robot 100 gives an advice to the different user 10 about taking an action of listening quietly or giving encouragement to improve the emotion value of the user 10.

Furthermore, the robot 100 determines an action of improving a relationship between the user 10 and the different user 10 based on the emotion of the user 10 and the emotion of the different user 10. For example, the robot 100 analyzes a cause of anger and unforgivable feelings of the users from the emotion "angry" of the user 10 and the emotion "angry" of the different user 10, and gives an advice for problem solving, such as analysis result sharing or provision of communication tips.

Moreover, the robot 100 determines an action of making the user 10 or the different user 10 understand one or both of the emotion of the user 10 and the emotion of the different user 10. For example, when the emotion of the user 10 is "angry", when the emotion of the different user 10 is "delighted", and when the different user 10 is not aware of the emotion "angry" of the user 10, the robot 100 confides in the different user 10 about the emotion of the user 10. Furthermore, for example, when the emotion of the user 10 is "sorrowful" and the emotion of the different user 10 is "angry", the robot 100 communicates with the different user 10 who is feeling "angry" about a sad feeling of the user 10 and a factor that causes the different user 10 feel angry, in such a manner that the different user 10 who is feeling "angry" is acceptable.

Moreover, the robot 100 analyzes the emotion of the user 10 and the emotion of the different user 10 who lives in a place a predetermined distance away from the residence of the user 10. For example, the robot 100 analyzes the emotion of the user 10 and the emotion of the different user 10 who lives in a remote place from the residence of the user 10 and who is in a relationship in the user 10, and gives an advice for maintaining or strengthen the relationship. For example, the robot 100 predicts a problem (for example, quarrel or the like) that may arise from the emotion "sad" of the user 10 and the emotion "happy" of the different user 10 who has a long-distance relationship, and takes an action of mediating between the users, such as understanding of the emotions or sharing of feelings, to prevent occurrence of the problem.

Furthermore, the robot 100 determines, as the action, provision of predetermined information to the different user 10 based on the emotion of the user 10, information on the user 10, and the emotion of the different user 10. For example, the robot 100 communicates with the different user 10 who is feeling "anxious" about a present that is expected by the user 10 based on the emotion "expectant" of the user 10, interest and hobby of the user 10, and the emotion "anxious" of the different user 10, in such a manner that the different user 10 is encouraged.

Moreover, the robot 100 determines, as the action, provision of predetermined information to the different user 10 based on at least one of past information, interest, concern, hobby, taste, tendency, and predetermined anniversary of the user 10 as the information on the user 10. For example, the robot 100 makes a proposal for a present that makes the user 10 feel loved and communicates with the different user 10 who is feeling "undecided" based on the emotion "bored" of the user 10, past information on the user 10 such as "factor that deepens the relationship with the different user", and the emotion "undecided" of the different user 10, in such a manner that the different user 10 who is feeling "undecided" can make a decision.

In this manner, in the present disclosure, the robot 100 is able to improve the relationship between the users 10.

A person DB that is included as a part of the storage unit 220 may include, as the information on the user 10, past information, interest, concern, hobby, taste, tendency, and predetermined anniversary of the user 10.

For example, the expression recognition unit 213 recognizes expression and an emotion of the different user 10 for whom the user 10 has given words and actions.

For example, the user state recognition unit 230 generates perception information such as "User is having conversations with different user", "User is smiling", or "User is enjoying conversations with probability of XX%", and performs processing of understanding a meaning of the generated perception information. For example, the user state recognition unit 230 generates semantic information such as "User is smiling while listening to the story of different user and seems enjoying conversations".

For example, the action recognition unit 234 recognizes the action of the user 10 such as "talk", "listen", or "physical contact" that is taken between the user 10 and the different user 10.

For example, the reaction rule 221 defines the action of the robot 100 corresponding to an action pattern such as a case in which the user 10 is talking, a case in which the user 10 is listening, and an utterance ("liven up" or "calm down") related to a request of the user 10.

For example, the action control unit 250 determines its own action corresponding to the emotion of the user 10 and the emotion of the different user 10, and controls the control target based on the determined own action. For example, from the analyzed emotion "angry" of the user 10 and the emotion "confused" of the different user 10, the action control unit 250 gives an advice to the different user 10 about information that is estimated as a cause of the emotion "angry" of the user 10 and handling (for example, the way to resolve misunderstandings or the way to express an apology) in accordance with the emotion "confused" of the different user 10 to ease the analyzed emotion "angry" of the user 10.

Furthermore, the action control unit 250 determines the action of improving interpersonal skills of the different user 10 based on the emotion of the user 10 and the emotion of the different user 10. For example, when the emotion of the user 10 is "delighted" and the emotion of the different user 10 is "bored", the action control unit 250 gives an advice to the different user 10 about words and actions for resonating with the emotion "delighted" of the user 10 to learn appropriate handling. For example, the action control unit 250 gives an advice to the different user 10 about a gesture or a body language for resonating with the emotion "delighted" of the user 10.

Moreover, the action control unit 250 determines the action of teaching the different user 10 about a behavior to improve the emotion of the user 10. For example, when the emotion of the user 10 is "sad", the action control unit 250 gives an advice to the different user 10 about taking an action of listening quietly or giving encouragement to improve the emotion value of the user 10.

Furthermore, the action control unit 250 determines the action of improving a relationship between the user 10 and the different user 10 based on the emotion of the user 10 and the emotion of the different user 10. For example, the action control unit 250 analyzes a cause of anger and unforgivable feelings of the users from the emotion "angry" of the user 10 and the emotion "angry" of the different user 10, and gives an advice for problem solving, such as analysis result sharing or provision of communication tip.

Moreover, the action control unit 250 determines an action of making the user 10 or the different user 10 understand one or both of the emotion of the user 10 and the emotion of the different user 10. For example, when the emotion of the user 10 is "angry", when the emotion of the different user 10 is "delighted", and when the different user 10 is not aware of the emotion "angry" of the user 10, the action control unit 250 confides in the different user 10 about the emotion of the user 10. Furthermore, for example, when the emotion of the user 10 is "sorrowful" and the emotion of the different user 10 is "angry", the action control unit 250 communicates with the different user 10 who is feeling "angry" about a sad feeling of the user 10 and a factor that causes the different user 10 feel angry, in such a manner that the different user 10 who is feeling "angry" is acceptable.

Moreover, the action control unit 250 analyzes the emotion of the user 10 and the emotion of the different user 10 who lives in a place a predetermined distance away from the residence of the user 10. For example, the action control unit 250 analyzes the emotion of the user 10 and the emotion of the different user 10 who lives in a remote place from the residence of the user 10 and who is in a relationship in the user 10, and gives an advice for maintaining or strengthen the relationship. For example, the action control unit 250 predicts a problem (for example, quarrel or the like) that may arise from the emotion "sad" of the user 10 and the emotion "happy" of the different user 10 who has a long-distance relationship, and takes an action of mediating between the users, such as understanding of the emotions or sharing of feelings, to prevent occurrence of the problem.

Furthermore, the action control unit 250 determines, as the action, provision of predetermined information to the different user 10 based on the emotion of the user 10, information on the user 10, and the emotion of the different user 10. For example, the action control unit 250 communicates with the different user 10 who is feeling "anxious" about a present that is expected by the user 10 based on the emotion "expectant" of the user 10, interest and hobby of the user 10, and the emotion "anxious" of the different user 10, in such a manner that the different user 10 is encouraged.

Moreover, the action control unit 250 determines, as the action, provision of predetermined information to the different user 10 based on at least one of past information, interest, concern, hobby, taste, tendency, and predetermined anniversary of the user 10 as the information on the user 10. For example, the action control unit 250 makes a proposal for a present that makes the user 10 feel loved and communicates with the different user 10 who is feeling "undecided" based on the emotion "bored" of the user 10, past information on the user 10 such as "factor that deepens the relationship with the different user", and the emotion "undecided" of the different user 10, in such a manner that the different user 10 who is feeling "undecided" can make a decision.

An example of an operation flow related to operation of determining an action in the robot 100 according to the sixth embodiment will be described below with reference to FIG. 24 similarly to the fifth embodiment. In the operation flow illustrated in FIG. 24, first, at Step S600, the user state recognition unit 230 recognizes the state of the user 10 based on the information analyzed by the sensor module unit 210. The user state recognition unit 230 generates perception information such as "User is having conversations with different user", "User is smiling", or "User is enjoying conversations with probability of XX%", and performs processing of understanding a meaning of the generated perception information. For example, the user state recognition unit 230 generates semantic information such as "User is smiling while listening to the story of different user and seems enjoying conversations".

At Step S601, the emotion determination unit 232 determines an emotion value indicating the emotion of the user 10 based on the information analyzed by the sensor module unit 210 and the state of the user 10 recognized by the user state recognition unit 230.

At Step S602, the emotion determination unit 232 determines an emotion value indicating the emotion of the robot 100 based on the information analyzed by the sensor module unit 210 and the state of the user 10 recognized by the user state recognition unit 230. The emotion determination unit 232 adds the determined emotion value of the user 10 to the history data 222.

At Step S603, the action recognition unit 234 recognizes an action classification of the user 10 based on the information analyzed by the sensor module unit 210 and the state of the user 10 recognized by the user state recognition unit 230. For example, the action recognition unit 234 recognizes the action of the user 10 such as "talk", "listen", or "physical contact".

At Step S604, the action determination unit 236 determines the action of the robot 100 based on the combination of the current emotion value of the user 10 determined at Step S601 and the past emotion value included in the history data 222, the emotion value of the robot 100, the action of the user 10 recognized by the action recognition unit 234, and the reaction rule 221.

At Step S605, the action control unit 250 controls the control target 252 based on the action determined by the action determination unit 236. For example, the action control unit 250 takes an action of improving a relationship between the user 10 and the different user 10.

At Step S606, the storage control unit 238 calculates a total value of the intensity based on action intensity that is determined in advance with respect to the action determined by the action determination unit 236 and the emotion value of the robot 100 determined by the emotion determination unit 232.

At Step S607, the storage control unit 238 determines whether or not the total value of the intensity is equal to or larger than a threshold. In a case where the total value of the intensity is smaller than the threshold, the data including the action of the user 10 is not stored in the history data 222, and the processing is terminated. In contrast, when the total value of the intensity is equal to or larger than the threshold, the processing proceeds to Step S608.

At Step S608, the action determined by the action determination unit 236, the information analyzed by the sensor module unit 210 from the current time point to a certain period before, and the state of the user 10 recognized by the user state recognition unit 230 are to be stored in the history data 222.

As described above, the robot 100 includes the control unit that analyzes the emotion of the user 10 and the emotion of the different user 10, determines the action of the robot 100 in accordance with the emotion of the user 10 and the emotion of the different user 10, and controls the control target based on the determined action of the robot 100. With this configuration, the robot 100 is able to determine the emotion of the user 10 and the action corresponding to the emotion of the different user 10, and improve relationship between the users 10.

Furthermore, the control unit of the robot 100 determines an action of improving interpersonal skills of the different user 10 based on the emotion of the user 10 and the emotion of the different user 10. With this configuration, the robot 100 is able to give an advice to the different user 10 about actions and words corresponding to the emotion of the user 10 and the emotion of the different user 10, train the different user 10 about appropriate responses, and improve interpersonal skills of the different user 10.

Moreover, the control unit of the robot 100 determines an action of teaching the different user 10 about a behavior for improving the emotion value of the user 10. With this configuration, the robot 100 is able to give an advice to the different user 10 about actions and words for improving the analyzed emotion value of the user 10, and train the different user 10 about appropriate responses to improve a relationship between the users 10.

Furthermore, the control unit of the robot 100 determines an action of improving the relationship between the user 10 and the different user 10 based on the emotion of the user 10 and the emotion of the different user 10. With this configuration, the robot 100 is able to give an advice corresponding to the emotions to the different user 10 who wants to get closer to the user 10 by using the emotion of the user 10 and the emotion of the different user 10, and improve the relationship between the users 10.

Moreover, the control unit of the robot 100 determines an action of making the user 10 or the different user 10 understand one or both of the emotion of the user 10 and the emotion of the different user 10. With this configuration, the robot 100 is able to make the user 10 or the different user 10 understand emotions of the other party and his/her own emotions, and improve the relationship between the users 10.

Furthermore, the control unit of the robot 100 analyzes the emotion of the user 10 and the emotion of the different user 10 who lives in a place a predetermined distance away from the residence of the user 10. With this configuration, the robot 100 is able to analyze emotions of the user 10 who have a long-distance relationship for example, take an action of preventing occurrence of a problem that may arise from the analyzed emotions to maintain the relationship, and take an action of improving the analyzed emotions to improve the relationship.

Moreover, the control unit of the robot 100 determines, as the action, provision of predetermined information to the different user 10 based on the emotion of the user 10, information on the user 10, and the emotion of the different user 10. With this configuration, when preparing a surprise present for a lover or a partner, the robot 100 is able to propose an optimal present by using the emotion, attribute information, or the like of the other party and give a support while resonating with the users 10 by using the emotions, so that it is possible to improve the relationship between the users 10.

Furthermore, the control unit of the robot 100 determines, as the action, provision of predetermined information to the different user 10 based on at least one of past information, interest, concern, hobby, taste, tendency, and predetermined anniversary of the user 10 as the information on the user 10. With this configuration, when preparing a surprise present for a lover or a partner, the robot 100 is able to propose an optimal present by using the emotion of the other party, past information, hobby, and taste of the other party, and information on anniversary and give a support while resonating with the users 10 by using the emotions, so that it is possible to improve the relationship between the users.

While the above embodiments are cases where the robot 100 recognizes the user 10 using the face image of the user 10, the disclosed technology is not limited to this aspect. For example, the robot 100 may recognize the user 10 using a voice uttered by the user 10, a mail address of the user 10, an ID of an SNS of the user 10, an ID card incorporating a wireless IC tag possessed by the user 10, or the like.

While the present invention has been described using the embodiments, the technical scope of the present invention is not limited to the scope described in the above embodiments. It is apparent to those skilled in the art that various modifications or improvements may be made to the above embodiments. It is apparent from the description of the claims that modes to which such changes or improvements have been added can also be included in the technical scope of the present invention.

It should be noted that the order of execution of each processing such as operation, procedures, steps, and stages in the apparatuses, systems, programs, and methods illustrated in the claims, the specification, and the drawings may be implemented in any order unless "before", "prior to", or the like is explicitly stated, and unless the output of the previous processing is to be used in the subsequent processing. Descriptions using "First,", "Next,", and the like used for convenience in the operation flows in the claims, specification, and the drawings are not intended to indicate that it is essential to perform operations in the order described.

### Reference Signs List

- 5: SYSTEM

- 10, 11, 12: USER
- 20: COMMUNICATION NETWORK
- 100, 101, 102: ROBOT
- 200: SENSOR UNIT
- 201: MICROPHONE
- 202: 3D DEPTH SENSOR
- 203: 2D CAMERA
- 204: DISTANCE SENSOR
- 210: SENSOR MODULE UNIT
- 211: VOICE EMOTION RECOGNITION UNIT
- 212: UTTERANCE COMPREHENSION UNIT
- 213: EXPRESSION RECOGNITION UNIT
- 214: FACE RECOGNITION UNIT
- 220: STORAGE UNIT
- 221: REACTION RULE
- 222: HISTORY DATA
- 223: CHARACTER DATA
- 230: USER STATE RECOGNITION UNIT
- 232: EMOTION DETERMINATION UNIT
- 234: ACTION RECOGNITION UNIT
- 236: ACTION DETERMINATION UNIT
- 238: STORAGE CONTROL UNIT
- 250: ACTION CONTROL UNIT
- 252: CONTROL TARGET
- 280: COMMUNICATION PROCESSING UNIT
- 290: SUPPORT UNIT
- 300: SERVER
- 1200: COMPUTER
- 1210: HOST CONTROLLER
- 1212: CPU
- 1214: RAM
- 1216: GRAPHICS CONTROLLER
- 1218: DISPLAY DEVICE
- 1220: INPUT/OUTPUT CONTROLLER
- 1222: COMMUNICATION INTERFACE
- 1224: STORAGE DEVICE
- 1226: DVD DRIVE
- 1227: DVD-ROM
- 1230: ROM
- 1240: INPUT/OUTPUT CHIP
- 2900: OUTPUT UNIT
- 2901: DETECTION UNIT
- 2902: OUTPUT CONTROL UNIT
- 2910: EVALUATION UNIT
- 2920: OUTPUT UNIT
- 2921: RECOGNITION UNIT

## Claims

1. An action control system comprising:
a detection unit that detects a learning status of a user in a predetermined field of study; and
an output control unit that causes an electronic device including a text generation model to output information corresponding to the learning status to the user.

2. The action control system according to claim 1, wherein the detection unit identifies the field of study corresponding to an age of the user and detects the learning status in the identified field of study.

3. The action control system according to claim 1, wherein
the detection unit detects a learning level in the field of study, and
the output control unit changes a method of outputting the information in accordance with the learning level.

4. The action control system according to claim 1, wherein
the detection unit detects interest of the user in an unfamiliar field of study, and
the output control unit causes the electronic device to output information on the field of study of interest.

5. The action control system according to claim 1, wherein
the detection unit detects a learning status of a field of study related to sensitivity of the user, and
the output control unit causes the electronic device to output information on the field of study related to the sensitivity.

6. The action control system according to claim 1, wherein
the detection unit detects a learning status for a test coverage of the user who takes a test, and
the output control unit causes the electronic device to output information corresponding to the learning status in the test coverage.

7. The action control system according to claim 1, wherein the electronic device is either mounted on a stuffed toy or connected, by a wireless or wired link, to a control target device mounted on the stuffed toy.

8. An action control system comprising:
a detection unit that detects an acquisition status of the user with respect to a predetermined language; and
an output control unit that causes an electronic device including a text generation model to output information corresponding to the acquisition status to the user.

9. An action control system comprising:
an evaluation unit that evaluates a state of a user based on user information on the user; and
an output control unit that causes an electronic device including a text generation model to output proposal information on a proposal for the state of the user to a predetermined output destination in accordance with the evaluation made by the evaluation unit.

10. An action control system comprising:
a recognition unit that recognizes an emotion of a user based on detection information detected from the user; and
an output control unit that causes an electronic device including a text generation model to output information on insurance in which the user is to enroll, in accordance with the emotion recognized by the recognition unit.

11. An electronic device comprising:
a control unit that recognizes an action of a user who performs a task related to programming, determines own action corresponding to the recognized action of the user, and controls a control target based on the determined own action.

12. An electronic device comprising:
a control unit that analyzes an emotion of a user and an emotion of a different user, determines own action corresponding to the emotion of the user and the emotion of the different user, and controls a control target based on the determined own action.
